(19) Europäisches Patentamt
European Patent Office
Office européen des brevets

(11) **EP 4 495 593 A1**

(12) **EUROPEAN PATENT APPLICATION**

(43) Date of publication:
**22.01.2025 Bulletin 2025/04**

(21) Application number: **23186904.1**

(22) Date of filing: **21.07.2023**

(51) International Patent Classification (IPC):
***G01N 29/02*** (2006.01)  ***G01N 29/22*** (2006.01)

(52) Cooperative Patent Classification (CPC):
**G01N 29/022; G01N 29/226;** G01N 2291/021;
G01N 2291/022; G01N 2291/0256; G01N 2291/106

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Karlsruher Institut für Technologie**
**76131 Karlsruhe (DE)**

(72) Inventors:
• **Okur, Salih**
  **76227 Karlsruhe (TR)**

• **Hashem, Tawheed**
  **76344 Eggenstein-Leopoldshafen (DE)**
• **Heinke, Lars**
  **76133 Karlsruhe (DE)**
• **Wöll, Christof**
  **76185 Karlsruhe (DE)**
• **Bräse, Stefan**
  **53842 Troisdorf (DE)**

(74) Representative: **Meissner Bolte Düsseldorf**
**Patentanwälte Rechtsanwälte**
**Partnerschaft mbB**
**Kaiserswerther Straße 183**
**40474 Düsseldorf (DE)**

(54) **HIGHLY STABLE SENSOR ARRAY FOR MOLECULE DETECTION IN GASEOUS AND/OR LIQUID MEDIA**

(57)    Highly stable sensors and sensor arrays for the detection of molecules in gaseous and/or liquid media, particularly sensors and sensor arrays based on sensors having metal-organic frameworks, especially UiO-66 or derivatives, bonded to them as well as e-noses and e-tongues based thereon as well as the corresponding preparation processes and uses.

Fig. 1

EP 4 495 593 A1

**Description**

The present invention is directed to highly stable sensors and sensor arrays for the detection of molecules in gaseous and/or liquid media, particularly sensors and sensor arrays based on sensors having metal-organic frameworks, especially UiO-66 or derivatives, bonded to them as well as e-noses and e-tongues based thereon as well as the corresponding preparation processes and uses.

It should be understood that this invention is not limited to the embodiments disclosed in this summary, or the description that follows, but is intended to cover modifications that are within the spirit and scope of the invention, as defined by the claims.

In the present application, including the claims, other than in the operating examples or where otherwise indicated, all numbers expressing quantities or characteristics are to be understood as being modified in all instances by the term "about". Accordingly, unless indicated to the contrary, any numerical parameters set forth in the following description may vary depending on the desired properties one seeks to obtain in the compositions and methods according to the present disclosure. At the very least, and not as an attempt to limit the application of the doctrine of equivalents to the scope of the claims, each numerical parameter described in the present description should at least be construed in light of the number of reported significant digits and by applying ordinary rounding techniques.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10. The terms "one," "a," or "an" as used herein are intended to include "at least one" or "one or more," unless otherwise indicated.

Any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as set forth herein supersedes any conflicting material incorporated herein by reference. Any material, or portion thereof, that is said to be incorporated by reference herein, but which conflicts with existing definitions, statements, or other disclosure material set forth herein is only incorporated to the extent that no conflict arises between that incorporated material and the existing disclosure material.

Background of the invention:

Odour is originated from the interaction between combined volatile gas compounds. Since odours possess a sensorial (odour) as well as a chemical (odorant) constituent, characterizing the emitted odour is a daunting task. Due to their extremely low concentrations (ppb or ppt levels), they are extremely challenging to be identified using analytical methods; however, humans can detect trace quantities of these substances. As a result, continuous monitoring and supervision of emitted odours using technical measurement techniques are highly demanding.
Technical measurement techniques based on sensors to determine molecules in gas and liquid phases (sometimes called electronic noses and electronic tongues or e-noses and e-tongues), are required in various industrial areas such as food industry, safety control, medical purposes, and so on.

Several different electronic noses for odour measurement, relying on applying various sensor types (e.g., MOS, QMB, CPS, SAW, and EC) are known, as for example described in Wilson, A.D. and M. Baietto, Applications and advances in electronic-nose technologies. Sensors, 2009. 9(7): p. 5099-5148. Currently, the most effective analytical approach is multigas-sensor arrays, which allow for measuring overall odour parameters by means of unspecific, broadband multigas-sensor arrays training with olfactometric measurements. Correlations to odour can be determined using statistical data analysis tools. In this case, the concentrations measured are expressed in $ou/m^3$. As a result of unspecific sensors, multigas-sensor arrays can detect a broad range of substances. They may supply data continuously about the global composition of air samples. Following training (referencing) using olfactometric analysis, they can provide information regarding odour concentration. Numerous sensor types now use various kinds of e-nose systems (multigas-sensor) globally. Unfortunately, each sensor exhibited a range of drawbacks, rendering e-nose systems unsuitable for use in particular fields. According to Wilson et al, the advantages and disadvantages of the prior art e-nose sensor types can be summarised as follows:

| Sensor type | Advantages | Disadvantages |
|---|---|---|
| Calorimetric or catalytic bead (CB) | Fast response and recovery time and high specificity for oxidized compounds | High-temperature operation, only sensitive to oxygen-containing compounds |

(continued)

| Sensor type | Advantages | Disadvantages |
|---|---|---|
| Catalytic field-effect sensors (MOSFET) | Small sensor size, inexpensive operating costs | Requires environmental control, baseline drift, low sensitivity to ammonia and carbon dioxide |
| Conducting polymer sensors | Ambient temperature operation, sensitive to many VOCs, short response time, diverse sensor coatings, inexpensive, resistance to sensor poisoning | Sensitive to humidity and temperature, sensors can be overloaded by certain analytes, sensor life, is limited |
| Electromechanical sensors (ES) | Ambient temperature operation, low power consumption, very sensitive to diverse VOCs | Bulky size, limited sensitivity to simple or low mol. wt. gases |
| Metal oxides semiconducting (MOS) | Very high sensitivity, limited sensing range, rapid response, and recovery times for low mol. wt. compounds (not high) | High-temperature operation, high power consumption, sulfur & weak acid poisoning, limited sensor coatings, sensitive to humidity, poor precision |
| Optical sensors | Very high sensitivity, capable of identifications of individual compounds in mixtures, multiparameter detection capabilities | Complex sensor-array systems, more expensive to operate, low portability due to delicate optics and electrical components |
| Quartz crystal microbalance (QMB) | Good precision, a diverse range of sensor coatings, high sensitivity | Complex circuitry, poor signal-to-noise ratio, sensitive to humidity and temperature |
| Surface acoustic wave (SAW) | High sensitivity, good response time, diverse sensor coatings, small, inexpensive, sensitive to virtually all gases | Complex circuitry, temperature sensitive, specificity to analyte groups affected by a polymeric film sensor coating |

As further prior art, Okur, S., et al., "Sniff species: SURMOF-based sensor array discriminates aromatic plants beyond the genus Level", Chemosensors, 2021. 9(7): p. 171 or Okur, S., et al., "An enantioselective e-nose: an array of nanoporous homochiral MOF films for stereospecific sensing of chiral odors", Angewandte Chemie International Edition, 2021. 60(7): p. 3566-3571 could be mentioned.

An example for a known metal organic framework is UiO-66, which has a structure of $Zr_6O_4(OH)_4$ clusters (the so-called secondary building units (SBU)) which are connected by 12 terephthalate-linkers with the neighbouring secondary building units. The resulting structure is porous and has two different kinds of pores which are connected via triangular windows. The smaller pores are tetrahedral and the larger ones octahedral.

WO 99/40423A1 discloses various possible ideas on how to make sensors, possibly for enantiomeric detection; US 2015/0150778 A1 discloses sensor arrays in which the detection is based on measuring electrical resistances and WO 2008/096239 A1 describes organic thin film transistors that can detect compounds by the aid of very specific sulphur-containing organic compounds. WO 2022/002507 A1 discloses sensor arrays and e-noses for enantioselective substance detection.

However, there still is a need for improved sensors, particularly ones with improved stability, selectivity and usability in different media.

Objects of the invention:

It was accordingly an object of the present invention to provide sensors for the detection and discrimination of organic and/or inorganic molecules, particularly sensors with improved stability, selectivity to the respective molecules and usability in different media.

It was a further object of the invention to provide e-noses and e-tongues sensors for the detection and discrimination of organic and/or inorganic molecules, particularly e-noses and e-tongues with improved stability, selectivity to the respective molecules and usability in different media.

Further objects will become apparent to those skilled in the art upon regarding the following disclosure.

Solution of the Invention:

These and other objects are solved by the subject matter outlined in the independent claims.

Preferred embodiments are outlined in the dependent claims as well as the following description.

Detailed description:

In the present invention, unless otherwise specified, the reactions are conducted at room temperature, which is understood as being 20°C.

In the present invention, unless otherwise specified, the reactions are conducted at ambient pressure, which is understood as being 101,325 kPa.

The present invention is based on sensors and sensor arrays for the detection and discrimination of molecules in gaseous and/or liquid media, wherein the sensors and sensor arrays are in particular based on sensors having metal-organic frameworks, especially UiO-66 or derivatives, bonded to them.

The devices, sensors or sensor arrays of the present invention are capable of distinguishing or differentiating between different chemical compounds.

The sensor arrays of the present invention are able to work like or more particularly as part of an electronic nose, e-nose, and/or electronic tongue, e-tongue.

The present invention thus also relates to a device for detecting the presence or absence of an analyte in a fluid, preferably a liquid phase or a gas phase, particularly preferred a gas phase, wherein the device comprises a sensor. In embodiments the device would be or be described as an electronic nose and/or electronic tongue.

In preferred embodiments of the present invention, the analyte can be in liquid phase and/or the analyte can be in a gaseous phase and contacts the sensor.

The analyte, by itself or as part of an analyte containing medium, being preferably liquid or gaseous, especially gaseous, can be chiral or achiral.

To this end, the present invention is specifically directed to the following particular subject matter/embodiments.

One particular subject matter of the present invention is a sensor for the detection of molecules based on a surface anchored metal organic framework comprising or consisting of

- a sensor substrate, and
- a metal organic framework of UiO-66 or UiO-66 derivatives coated onto at least one part of the surface of the sensor substrate.

While in general and in some preferred embodiments, the sensor substrates may be chosen from those described below, in particularly preferred embodiments of the present invention, the sensor substrates are quartz-crystal microbalance sensors.

The metal organic framework that is employed in the sensors according to the present invention is preferably selected from the group consisting of UiO-66, UiO-66-$NH_2$, UiO-66-$N_3$, UiO-66-Cl, UiO-66-OH, UiO-66-COOH, UiO-66-SH, UiO-66-$NO_2$, UiO-66-$(COOH)_2$, UiO-66-$F_4$, UiO-66-$(OH)_2$, UiO-66-nitrosyl, UiO-66-Br and mixtures thereof, preferably UiO-66-$NH_2$, UiO-66-$N_3$, UiO-66-OH, UiO-66-COOH, UiO-66-SH, UiO-66-nitrosyl or UiO-66-Cl, more preferably UiO-66-$NH_2$ or UiO-66-$N_3$ or UiO-66-Cl and in some embodiments in particular UiO-66-$NH_2$.

A further subject matter of the present invention is also the novel MOF selected from the group consisting of UiO-66-$N_3$ and UiO-66-Cl and derivatives thereof, wherein derivatives means that at least 51%, preferably at least 75%, more preferably at least 85%, even more preferably at least 95%, still more preferably at least 98% and in particular at least 99% or 100%, of the, with respect to UiO-66, added functionality is -$N_3$-functionality, -Cl-functionality, respectively.

In preferred embodiments of the present invention, the metal organic framework is connected with the surface of the sensor substrate via organic spacer molecules, preferably selected from the group consisting of 11-mercapto-undecanol, 16-mercaptohexadecanoic acid, 11-(triethoxysilyl)undecanal, 1-decanethiol and mixtures thereof, more preferably selected from 11-mercapto-undecanol, 16-mercaptohexadecanoic acid, 11-(triethoxysilyl)undecanal, 1-decanethiol, in particular 11-mercapto-undecanol, wherein the organic spacer molecules preferably form a monolayer, in particular a self-assembled monolayer.

A further particular subject matter of the present invention is a process for preparing sensors, in particular according to the present invention, comprising or consisting of the steps of:

i) providing a sensor substrate,
ii) applying an organic spacer onto the sensor substrate,
iii) applying, layer-by-layer, a metal organic framework with the following sub-steps of

iii)a) applying a metal solution, preferably by dipping the coated sensor substrate into a metal solution,
iii)a)-2 optionally performing a cleaning step, preferably by rinsing with the same solvent as that of the metal solution, especially DMF, or in some variants with diethylformamide (DEF),
iii)b) then applying a linker solution, wherein the linker has one or more than one functionality preferably selected from the group consisting of amino-functionality, $N_3$-functionality, Cl-functionality, Br-functionality, F-functionality, OH-functionality, COOH-functionality, SH-functionality, NOz-functionality, nitrosyl-functionality and mixtures thereof, preferably has at least one, particularly exactly one, amino-functionality, preferably by dipping the product of step iii)a) into the linker solution, iii)b)-2 optionally performing a cleaning step, preferably by rinsing with the same solvent as that of the linker solution, especially DMF, or in some variants with diethylformamide (DEF), iii)c) repeating iii)a) and iii)b), optionally also iii)a)-2 and iii)b)-2, for a specified number of times, preferably 20 to 40 times, in particular 30 times;

iv) optionally, if the linker has precursor-functionality, in particular amino-functionality, subsequently substituting at least one, preferably all, the $NH_2$-functional groups of the UiO-66 base structure with other functional groups, preferably those selected from the group consisting of $-N_3$, -Cl,- -COOH, -OH, -SH, -nitrosyl, -Br, in particular -Cl or $-N_3$.

Of course, further generally employed process steps like cleaning between different process steps or the like may be done according to the present invention as well; cleaning steps in particular are not excluded by "consisting of".

One particularly preferred embodiment of the present invention is a process for preparing sensors, in particular according to the present invention, comprising or consisting of the steps

i) providing a sensor substrate,
ii) applying an organic spacer onto the sensor substrate,
iii) applying, layer-by-layer, a metal organic framework with the following sub-steps of

iii)a) applying a metal solution, preferably by dipping the coated sensor substrate into a metal solution,
iii)a)-2 performing a cleaning step, preferably by rinsing with the same solvent as that of the metal solution, especially DMF, or in some variants with diethylformamide (DEF),
iii)b) then applying a linker solution, wherein the linker has one or more than one functionality preferably selected from the group consisting of amino-functionality, $N_3$-functionality, Cl-functionality, Br-functionality, F-functionality, OH-functionality, COOH-functionality, SH-functionality, NOz-functionality, nitrosyl-functionality and mixtures thereof, preferably has at least one, particularly exactly one, amino-functionality, preferably by dipping the product of step iii)a)-2 into the linker solution, iii)b)-2 performing a cleaning step, preferably by rinsing with the same solvent as that of the linker solution, especially DMF, or in some variants with diethylformamide (DEF), iii)c) repeating iii)a) and iii)b), optionally also iii)a)-2 and iii)b)-2, for a specified number of times, preferably 20 to 40 times, in particular 30 times;

iv) if the linker has precursor-functionality, in particular amino-functionality, subsequently substituting at least one, preferably all, the $NH_2$-functional groups of the UiO-66 base structure with other functional groups, preferably those selected from the group consisting of $-N_3$, -Cl,- -COOH, -OH, -SH, -nitrosyl, -Br, in particular -Cl or $-N_3$.

One further particularly preferred embodiment of the present invention is a process for preparing sensors according to the present invention consisting of the steps

i) providing a sensor substrate,
ii) applying an organic spacer onto the sensor substrate,
iii) applying, layer-by-layer, a metal organic framework with the following sub-steps of

iii)a) applying a metal solution, preferably by dipping the coated sensor substrate into a metal solution,
iii)a)-2 performing a cleaning step by rinsing with the same solvent as that of the metal solution, especially DMF, or in some variants with diethylformamide (DEF), iii)b) then applying a linker solution, wherein the linker has one amino-functionality, by dipping the product of step iii)a)-2 into the linker solution,
iii)b)-2 performing a cleaning step by rinsing with the same solvent as that of the linker solution, especially DMF, or in some variants with diethylformamide (DEF),
iii)c) repeating iii)a), iii)a)-2, iii)b) and iii)b)-2 20 to 40 times, in particular 30 times;

iv) subsequently substituting the NHz-functional groups of the UiO-66 base structure with other functional groups, preferably those selected from the group consisting of $-N_3$, -Cl,- -COOH, -OH, -SH, -nitrosyl, -Br, in particular -Cl or $-N_3$.

The metals that can be used for forming the SURMOF in the present invention, for example and in particular in step iii)a) of the above process, are preferably selected from Ce, Hf and Zr. Particularly preferred is Zr. While in principle possible, these are usually not employed as metals in the preparation process but in the form of their ions and dissolved in a solvent or solvent mixture.

As solvents for the metals several ones that are commonly used for this (such) process(es) can be employed, preferably the solvents are selected from the group consisting of dimethylformamide (DMF), N,N-Diethylformamid (DEF) and mixtures thereof. In particular, DMF is used as solvent in this context.

Linkers that can be used for forming the SURMOF in the present invention, for example and in particular in step iii) b) of the above process, are preferably selected from terephthalic acid derivatives having appended to them the respective functional group for the desired UiO-66-derivative or a precursor group, in which the latter is preferably an amino-group or a nitro-group, and 2-aminoterephthalic acid (BDC-$NH_2$). For the derivatives it is preferred, if the functional group or precursor group is in the 2-position. Particularly preferred is 2-aminoterephthalic acid.

As solvents for the linkers several ones that are commonly used for this (such) process(es) can be employed, preferably the solvents are selected from the group consisting of dimethylformamide (DMF), N,N-Diethylformamid (DEF) and mixtures thereof. In particular, DMF is used as solvent in this context.

In some embodiments of the present invention it is preferred, if the solvent (or solvent mixture) used in steps iii)a) and iii)b) is the same or that compatible ones are used. Particularly preferably the same solvent is used. Compatible solvents in this context means solvents that are do not separate under the reaction conditions or that can be mixed in any ratio.

In some embodiments of the present invention, it is preferred that a linker is employed in the preparation of the SURMOF that does not have the intended functional group to be present in the final SURMOF but has a precursor group. These precursor groups can then be re-functionalized in an optional step (step iv) of the above process) in order to replace the precursor group with the desired functional group.

In preferred embodiments the precursor group is selected from amino-groups, nitro groups. Particularly preferred groups are amino groups.

These precursor groups can be re-functionalized according to known chemical processes. For example, and preferred for amino-groups, the re-functionalization can be done via Sandmeyer reactions.

It should be noted, that it is possible for the SURMOF and/or sensors according to the present invention to have mixed functionalities, in particular -$N_3$-functionality, -Cl-functionality and -$NH_2$-functionality. While it is preferred that the sensors have different functional groups to improve the selectivity of the e-nose, it is also possible that the SURMOF and/or sensors of the present invention only have one functionality. If the SURMOF and/or sensors of the present invention have mixed functionalities these are preferably achieved by using either a linker solution in step iii)b) of the above method that contains a mixture of different linker molecules, i.e. linker molecules having different functionalities (optionally and/or at different positions in the linker molecule), or different solutions are employed when step iii)b) is repeated; the latter provides the possibility to provide SURMOF with differently functionalized layers depending on the respective linker solution used in each step iii)b).

In some specific embodiments, the electronic nose (E-nose) according to the present invention is comprised of a single type of highly stable surface-mounted metal-organic framework (SURMOF), in particular UiO-66. The sensor array in these embodiments can preferably be constructed by synthesizing UiO-66 SURMOFs with various active functional groups, such as UiO-66-$NH_2$, UiO-66-$N_3$, UiO-66-Cl, among others. By this, sensors that exhibit exceptional stability and can operate effectively in both gas and liquid environments can be made. Each sensor within these arrays is preferably distinguished by a distinct functional group, which is one way of enabling differentiated sensing capabilities

A still further particular subject matter of the present invention is a sensor array comprising or consisting of,

A) at least one sensor according to the present invention or prepared according to the process according to the present invention,

or

B) two or more sensors according to the present invention or prepared according to the process according to the present invention and which are different from each other.

In case B) the differences in the sensors may be the sensor substrate or the metal organic framework (MOF) or the spacer molecules. It is particularly preferred if the differences only lie in the MOF and therein in particular in the functional groups pending. Therefore, preferred embodiments feature sensors that have the same sensor substrate, especially QCM, the same spacer molecule, especially MUD but different derivatives of UiO-66 (including UiO-66 itself), selected from the group consisting of UiO-66, UiO-66-$NH_2$, UiO-66-$N_3$, UiO-66-Cl, UiO-66-OH, UiO-66-COOH, UiO-66-SH, UiO-66-$NO_2$, UiO-66-$(COOH)_2$, UiO-66-$F_4$, UiO-66-$(OH)_2$, UiO-66-nitrosyl, UiO-66-Br and mixtures thereof, preferably UiO-66-$NH_2$ or UiO-66-$N_3$ or UiO-66-Cl and in some embodiments in particular UiO-66-$NH_2$.

In some embodiments of the present invention, the sensor arrays may comprise C) further sensors based on other metal organic frameworks, particularly based on chiral metal-organic frameworks selected from the group consisting of Cuz(DCam)z(dabco), $Cu_2(DCam)_2$(BiPy), $Cu_2(DCam)_2$(BiPyB), respectively, and/or achiral metal-organic frameworks selected from the group consisting of HKUST-1, Cu(BDC), Cu(BPDC), these may for example be the sensors described and claimed in WO 2022/002507 A1.

These arrays can be prepared simply by arranging the individual sensors on any kind of carrier substrate, whose material, of course, needs to be inert (or resistant) to the medium in which the sensors should be employed, and then wiring the respective sensors so that their responses can be read/detected and computed.

In embodiments of the present invention the sensor array comprises at least 1 sensor, preferably at least 2 sensors and more preferably at least 3 sensors and, independently of the minimal number of sensors, up to 30 sensors, preferably up to 20 sensors, in particular up to 16 sensors, wherein the individual sensors may be the same or different, preferably different. In embodiments the sensor array may feature up to 26 different sensors, of which 13 different may be based on QCM sensors substrates and 13 may be based on FET sensor substrates and the 13 individual ones originate from the various MOF outlined above (and below). In one embodiment of the present invention 3 to 16 sensors are employed.

In order to enhance the selectivity of the sensors, differentiation among them can be ensured, as elucidated above. This differentiation can stem from the utilization of distinct active functional groups in each sensor, which contributes to their varying chemical characteristics and ultimately enhances their selectivity.

One further another particular subject matter of the present invention is the use of the sensors according to the present invention or prepared according to the process of the present invention or sensor arrays according to the present invention or an electronic nose and/or electronic tongue according to the present invention for the detection and discrimination of substances, preferably selected from the group consisting of ethanol, water, cyclohexane, 2-propanol, methanol, p-xylene, toluene, n-hexane and mixtures thereof.

Some further explanations as well as further embodiments of the present invention, some preferred some alternatives, in particular for the above mentioned particular subject matters, will be described and outlined below.

In embodiments of the present invention, the sensor or sensor arrays would be based on sensor substrates that are quartz-crystal microbalance sensors.

In embodiments of the present invention, Transistor (especially FET) and capacitance methods for sensing can be employed instead of QCM sensors.

In some embodiments of the present invention in the sensor arrays sensors are used, which differ in their sensor substrates, i.e. not all of the sensor are based on quartz-crystal microbalance (QCM), but are based on sensor (substrates) selected from the group consisting of

- fibre optical sensors and surface acoustical wave sensors;
- solid state detectors, preferably ultraviolet, visible and near-infrared radiation micro sensors, particularly as photoconductive cells, photodiodes, phototransistors;
- mechanical sensors, preferably displacement microsensors, capacitive and inductive displacement sensors, optical displacement sensors, ultrasonic displacement sensors;
- chemical or biochemical sensors, preferably metal oxide gas sensors, particularly tin oxide gas sensors, organic gas sensors, particularly inorganic Schottky devices, metal oxide field-effect transistor (metal oxide semiconductor field-effect transistor equal sign MOSFET), electrochemical cell sensors, infrared sensors, surface plasmon sensors;
- sintered metal oxide sensors, phthalocyanine sensors, conducting polymer sensors, lipid coating sensors and metal FET structures;
- metal oxide sensors, preferably as catalytic gas sensors, organic semi conducting gas sensors, solid electrolyte gas sensors, Langmuire-Blodgett films, and mixtures thereof.

In preferred embodiments of the present invention, only quartz-crystal microbalance sensors alone are used as sensors. In more preferred embodiments, the quartz-crystal microbalance sensors are coated with a metal, preferably a conductive metal, especially coated with gold or gold alloys; the most preferred coating is of gold.

When combining the preferred quartz-crystal microbalance sensors with sensor units based on the other mentioned sensor substrates it becomes possible to prepare sensor arrays that can be more finely tuned to the respective needs of the desired application.

A preferred sensor-basis to be employed in the present invention, which is used to determine the molecular uptake of the substances to be detected, is a quartz-crystal microbalance (QCM), where the recorded frequency shift, corresponding to the mass change, can be used as sensor signal.

However, in the most preferred embodiments of the present invention, only quartz-crystal microbalance sensors alone are used because then only one kind of sensor response is generated and it is easier to connect suitable detection units designed to detect the signals of the quartz-crystal microbalance sensors (QCM sensors), specifically.

The preferred sensor substrates of the present invention are in one preferred embodiment of the present invention gold-coated quartz-crystal microbalance substrates. Even more preferred in some embodiments it is that these gold-coated quartz-crystal microbalance substrates are additionally functionalized. In particularly preferred embodiments, the gold-coated quartz-crystal microbalance substrates are functionalized with one or more self-assembled organic monolayers (SAM or SAoM), preferably form a compound selected from the group consisting of 11-mercapto-undecanol, 16-mercaptohexadecanoic acid, 11-(triethoxysilyl)undecanal, 1-decanethiol and mixtures thereof, more preferably selected from 11-mercapto-undecanol, 16-mercaptohexadecanoic acid, 11-(triethoxysilyl)undecanal, 1-decanethiol, in particular 11-mercapto-undecanol.

Of these, a particularly preferred example is 11-mercapto-1-undecanol (MUD) self-assembled monolayer.

By increasing the number of the individual sensors present in a sensor array, inter alia, the accuracy and detection limit can be increased.

A further subject matter of the present invention are electronic noses and/or electronic tongues which comprise the sensor arrays according to the present invention.

Such electronic noses and/or electronic tongues basically are sensor arrays according to the present invention which have an area where the fluid to be analysed is contacted with the sensor array, a means for detecting the sensor output and a means for outputting said received sensor data.

Therefore, yet another particular subject matter of the present invention is an electronic nose and/or electronic tongue comprising:

i) a means for receiving a fluid, liquid or gaseous, to be analysed and supplying the fluid to a detection region, wherein such a detection region can in preferred embodiments be a cavity,

ii) one or more sensors or sensor arrays according to the present invention which are arranged in that detection region and which are configured to come into contact with the fluid, and, accordingly, with the therein contained analyte(s),

iii) a means for receiving and evaluating the sensor data generated from that contact,

iv) a means for outputting the received and evaluated data,

v) optionally a device for storing the received and evaluated data.

In this context the means for receiving and evaluating the sensor data can be a detector that is operatively associated with each sensor in order to detect the presence of an analyte or analytes. The evaluation of the sensor data usually is done by comparing the sensor data to a library of response signatures to determine the particular analyte(s) in the fluid.

The means for outputting the received and evaluated data can be any means that is suitable to somehow communicate the information to the user. Usual means would be monitors or printers. Other means for outputting the data could also be in certain embodiments acoustic devices which upon detection of one or more analyte sound an acoustic signal so that the user is informed that such an analyte is detected; similarly, simple optical devices like blinking lamps could be used as well. The exact device for outputting the data

However, in the present invention it is possible to not only qualitatively detect the analyte(s) but also to quantify the amount of analyte(s) present.

Therefore, it is preferred to not only output the received and evaluated data but also to store the data, particularly on electrical storage devices.

The gathered data then can also be used to improve the already stored library of response signatures in order to increase the detection accuracy and detection limit further. In preferred embodiments, this is done by machine learning and/or artificial intelligence programs.

A further subject matter of the present invention is a process for detecting and discriminating substances or mixtures comprising or consisting of the substances.

According to the present invention such a process preferably comprises

I) providing a substance or substance mixture,

IIa) passing the substance or substance mixture over a sensor array according to the present invention, or

IIb) applying the substance or substance mixture to an electronic nose and/or electronic tongue according to the present invention,

III) evaluating the sensor signals, preferably with an algorithm, more preferably with an artificial intelligence or machine learning algorithm, particularly preferably with a k-nearest neighbour algorithm (kNN), linear discrimination analysis (LDA) and/or neural network analysis (NNA),

IV) outputting and/or storing of the result of evaluating step III).

It was found that the sensor arrays and the electronic noses of the present invention as well as the process according to the present invention are particularly well suited to analytes selected from the group consisting of ethanol, water, cyclohexane, 2-propanol, methanol, p-xylene, toluene, n-hexane as well as mixtures thereof.

Thus, both single ones of those mentioned as well as mixtures containing all the above mentioned compounds can be detected, evaluated and the respective compounds distinguished from one another both quantitatively as well as qualitatively.

The accuracy obtainable with the present invention, for example with respect to these compounds, is very high and can reach levels of 95% or even higher, for example accuracies of over 97% and up to 99%, or in some instances yet even higher and close to 100%, such as up to 99,9%.

In certain embodiments of the present invention, preferably the substances (analytes) to be detected and discriminated when using the sensor arrays according to the present invention or the electronic noses according to the present invention are selected from the group consisting of ethanol, water, cyclohexane,2-propanol, methanol, p-xylene, toluene, n-hexane and mixtures thereof.

It should, however, be understood, that the present invention is by no means restricted to the detection and discrimination of the specifically mentioned substances. Rather, the present invention is advantageously capable of detecting and discrimination a very large variety of substances. In particular, the sensor arrays and the e-noses/e-tongues of the present invention can be configured to detect much more individual substances. If any substance should be detected that has not been detected before, it is easy to provide it in solution with a known concentration, bring the solution into contact with the sensor arrays and then the sensor responses of the sensors of the array are detected and computed and, preferably stored in a substance-library in which it is cross-referenced with the sensor responses and the conditions. By doing so a number of times the library grows and more and more substances will be able to be detected reliably. The e-noses/e-tongues of the present invention can, for example, be trained with real time experimental data or using previously stored library information. An unknown gas/liquid from the trained set can then be discriminated according to the loaded training information, for example.

In principle, the present invention can be used to detect any substances that are able to either diffuse into the pores of the MOF or adhere to them in another way (for example by adhering to their outside and/or the functional groups).

The present invention thus also provides, inter alia, an e-nose and/or e-tongue, which is based on quartz-crystal microbalance (QCM) sensors coated with metal-organic framework (MOF) thin films based on metal organic frameworks selected from the group consisting of UiO-66, UiO-66-NH$_2$, UiO-66-N$_3$, UiO-66-Cl, UiO-66-OH, UiO-66-COOH, UiO-66-SH, UiO-66-NO$_2$, UiO-66-(COOH)$_2$, UiO-66-F$_4$, UiO-66-(OH)$_2$, UiO-66-nitrosyl, UiO-66-Br and mixtures thereof, preferably UiO-66-NH$_2$ or UiO-66-N$_3$or UiO-66-Cl, in some embodiments in particular UiO-66-NH$_2$. The MOF thin films are preferably directly prepared on the QCM sensors (which are preferably surface-treated and bearing a SAM layer, especially of MUD) in a layer-by-layer fashion, resulting in surface-mounted MOFs (SURMOFs). By (machine learning) algorithms, particularly ones based on k-nearest neighbour algorithm (kNN), linear discrimination analysis (LDA) and/or neural neural network analysis (NNA), the sensor arrays of the present invention can be used to discriminate molecules with very high accuracy. In some embodiments the discrimination is presented with 96.5% confidence or more.

The underlying principle of the present invention is that at least one analyte is led to or over the sensors, preferably QCM-SURMOF sensors, of the present invention and then the analyte adheres to (at least) one of the structures, depending on the respective molecular structures of analyte and SURMOF. The sensor-analyte aggregate, preferably QCM-SURMOF-analyte-aggregate, then, obviously, has a higher mass then the sensor had before.

The response of each QCM sensor, which is the frequency shift of the resonance frequency, is proportional to the mass change caused by the molecular uptake. Thus, it is possible to detect single analytes led over the sensors of the present invention.

However, with the present invention it is also possible to detect and discriminate several analytes simultaneously.

When the QCM-SURMOF-array is exposed to the different molecules, the frequency shift of each sensor can be recorded simultaneously.

Radar plots for the respective molecules at different concentrations also allow a discrimination of the molecules. In some embodiments of the present invention, the sensor array shows an essential linear response in the concentration range of roughly from 1 to 1000 ppm, in particularly preferred embodiments even beyond that range.

Since all the molecules have characteristic patterns on the radar plots, their identification is possible with the present invention. In one embodiment of the present invention, to that end a substance library with comparative data and plots of calibration-substances as well as already investigated substances is established. With the e-nose and/or e-tongue being calibrated, with one or more of these substances, or otherwise, the e-nose and/or e-tongue can detect and identify a huge variety of different molecules. In some embodiments of the present invention, the term "calibrated" can be substituted with the term "trained", if (supervised) machine learning methods are employed.

Therefore, one preferred employment of the sensors according to the present invention is as or in electronic noses and/or electronic tongues.

In alternatives of the invention, prior to SURMOF synthesis, the, preferably gold-coated, QCM substrates are functionalized in order to provide [111] and [200] crystal orientations of the SURMOF perpendicular to the substrate surface, or in some embodiments [001] orientation. Other orientations may be applicable for other embodiments. In this context it should be noted that highly oriented surface-mounted metal-organic frameworks (SURMOFs) can be achieved on various substrates, including gold, silver, SiOz, among others, but in particular those, especially gold. The substrates should in particular have a flat and smooth surface morphology and be amenable to functionalization with hydroxyl (OH) or carboxyl (COOH) groups in order to initiate the growth of SURMOFs on the surface.

The MOF thin films are then prepared on the functionalized surface in a layer-by-layer fashion.

The SURMOF samples are prepared by alternatively exposing the substrate to the metal node and to the linker solutions, preferably using a dipping method.

In preferred embodiments, the samples are prepared in 10 to 50, preferably 20 to 40, particularly 30 synthesis cycles.

The SURMOFs are preferably selected from the group consisting of UiO-66, UiO-66-NH$_2$, UiO-66-N$_3$, UiO-66-Cl, UiO-66-OH, UiO-66-COOH, UiO-66-SH, UiO-66-NO$_2$, UiO-66-(COOH)$_2$, UiO-66-F$_4$, UiO-66-(OH)$_2$, UiO-66-nitrosyl, UiO-66-Br and mixtures thereof, preferably UiO-66-NH$_2$ or UiO-66-N$_3$or UiO-66-Cl, in some embodiments in particular UiO-66-NH$_2$.

The application range of the sensors and sensor arrays of the present invention and the e-nose and/or e-tongue of the present invention is very wide, examples may include sensing of bioactive pheromones, e.g. to measure the communication between insects, examining product piracy, e.g. of perfumes and aromas, to quality control of food.

Accordingly, the sensors and sensor arrays of the present invention are very well suited for detecting and discriminating analytes selected from the group consisting of ethanol, water, cyclohexane,2-propanol, methanol, p-xylene, toluene, n-hexane and mixtures thereof.

Accordingly, particularly preferred embodiments of the present invention are QCM sensors and/or sensor arrays coated with different covalently bound MOF films which work as electronic noses and/or electronic tongues, able to distinguish molecules.

In order to correctly assign and quantify the sensor data of the enantioselective sensors according to the present invention, or the e-noses of the present invention, the data from the sensor array is analysed, preferably by a (machine learning) algorithm.

Particularly the (machine learning) algorithm is a k-nearest neighbour algorithm (kNN), linear discrimination analysis (LDA) and/or neural network analysis (NNA). Then, the sensor data is grouped according to the analysis.

For example, in the k-NN classification, a set X of n points and a distance function, k-NN searches the k closest points in X to the set of selected points. The number of nearest neighbours should be specified during the k-NN classification. The distance weight can also be specified with the distance weighting function such as equal (without weight function), inverse (weight is 1/distance), squared inverse (weight is 1/distance2), cosine or cubic etc. This is known to the person skilled in the art and does not need to be elaborated on in more detail.

When, in preferred embodiments, a calculated confusion matrix is applied to the data achieved with the present invention it shows that the response of different chemicals can be distinguished.

The most preferred sensor according to the present invention is a quartz-crystal microbalance sensor.

The following sensors and sensor structures are also possible in other embodiments:

- fibre optical sensors and surface acoustical wave sensors;
- solid state detectors, preferably ultra-violet, visible and near infrared radiation microsensors, particularly as photoconductive cells, photodiodes, phototransistors;
- mechanical sensors, preferably displacement microsensors, capacitive and inductive displacement sensors, optical displacement sensors, ultrasonic displacement sensors, surface acoustic wave resonant devices;
- chemical or biochemical sensors, preferably metal oxide gas sensors, particularly tin oxide gas sensors, organic gas sensors, particularly inorganic Schottky devices, metal oxide field-effect transistor (metal oxide semiconductor field-effect transistor = MOSFET), electrochemical cell sensors, infrared sensors, surface plasmon sensors;
- sintered metal oxide sensors, phthalocyanine sensors, conducting polymer sensors, lipid coating sensors and metal FET (field-effect transistor) structures;
- metal oxide sensors, preferably as catalytic gas sensors, organic semiconducting gas sensors, solid electrolyte gas sensors, Langmuir-Blodgett films.

In the context of the present invention it is possible to combine different sensors in one e-nose/e-tongue, e.g. one or more QCM sensors and one or more of the other mentioned sensors. In one embodiment an array of QCM sensors is combined with one or more arrays based on other sensors.

In this way, it is possible to even further enhance the accuracy of the e-noses/e-tongues according to the present invention.

A further subject matter of the present invention is a portable setup for an e-nose and/or e-tongue according to the present invention. This setup comprises a first mixing vessel, which can basically be any vessel that allows a sample to flow through or to be inserted and mixed therein, e.g. it can be in the form of a glass vial. The sample containing the molecules to be detected/examined is added into/flows through that mixing vessel. The addition can be done by any means capable of transferring the sample. As this setup is to be portable, a preferred device for adding the sample is a syringe. In the mixing vessel it is possible to control the concentration and, if the device is an e-nose (i.e. configured to detect molecules from the gas phase), the sample can be evaporated by heating, preferably with a heating device like a resistive bulb heater. In the case of an e-nose, the evaporated gas then flows along a feed line, while in the case of an e-tongue the (non-evaporated) liquid flows along a feed line, which feed line can be any gas-tight/liquid-tight line or tube to a sensor array according to the present invention; combined flows of gas and liquid are possible in the case of a combined e-nose/e-tongue. Typically, in such a setup, the sensor array is present in in a housing with a sufficient size, for example a 3D-printed one, preferably along with a humidity/temperature sensor, and a frequency counter; of course, the necessary electronics, e.g. printed circuit boards or the like, are present in that housing as well. Basically, the housing has the function to protect the sensor array as well as the other components and to make them easily manageable. The housing has a fluid (for gas and/or liquid) inlet to which the feed line is connected and a fluid (for gas and/or liquid) outlet which enables the flow of the gas and/or liquid through the housing. The fluid outlet can be connected to a return line, along which the fluid can flow back to the mixing vessel. The circulation of the fluid flow can be facilitated by a pump, like a diaphragm pump, however the circulation can also be based on a fluid flow independent of the sensor or even diffusion, i.e. in these cases the sensor is simply put into the flow or the sample of a fluid (possibly) containing the analyte(s). In this setup, the feed line and the return line both feature valves, preferably three-way valves. After a liquid has flown trough the sensor array, the one valve can be put in a position that the path between the housing and the mixing vessel (as well as pump) is blocked and the other valve can be put into a position that the feed line is blocked between the mixing vessel and the housing. Then purge fluid, like inert gas, e.g. nitrogen gas, can be fed into the lines and purge the volume between the two valves. The purge fluid can be provided by a stationary supply line or by transportable bottles, depending on what is available at the location where measurement is desired. Depending on the orientation of the valves, either the side of the mixing vessel or the side of the sensor array can be purged, thus enabling easy cleaning of the portable e-nose/e-tongue setup before another test is done. It is preferred for this portable setup that the sensor array is additionally covered by a head space of sufficient size in order to minimize the volume the fluid has to flow through, to ensure sufficient contact of the fluid with the sensors and also to protect the electronic parts from the fluid. The set-up can be in the form of a closed loop tubing. The housing preferably has interfaces to attach a computer to it; for example via USB, or via wireless connectivity. The computer, usually a common personal computer or a smartphone (in both instances with a software to interpret the sensor data), can therefore be attached and/or wirelessly connected to the housing and the sensor array in order to facilitate analysis and evaluation of the sensor data. However, if only qualitative evaluation, whether a certain compound is present in the sample or not, is intended, it is also possible to provide the housing with a simple indicator like a light, especially an LED-light (diode) and not use a computer. This setup is especially suitable for faster measurements on location.

It is even possible to further simplify this setup to a two-part embodiment by providing a detection part comprising a housing basically as described above and a sample-part comprising a housing in which a mixing vessel, a feed line, a return line, both with valves, preferably three-way valves, and possibly a pump are arranged in and connected to the housing.

In certain embodiments, the e-noses/e-tongues or the e-nose/e-tongue systems of the present invention of the present invention are configured to have the capability to exhibit the measured sensor data and communicate through buttons (or e.g. touch screen menu) to train the system. Moreover, they can be configured to be able to also test new samples concerning the or based on the training data without requiring a computer. These can then be equipped with a built-in and programmed microprocessor and can operate stand-alone, which means it they can be configured in embodiments to be controlled via the internet and/or cellular phone apps.

Thus a further subject matter of the present invention is a portable detection kit for the detection and discrimination of substances, preferably selected from the group consisting of ethanol, water, cyclohexane,2-propanol, methanol, p-xylene, toluene, n-hexane and mixtures thereof, comprising:

A) a first sample housing comprising in its interior

A1) a fluid-tight (gas-tight and/or liquid-tight) mixing vessel configured to allow a sample to flow through or to be added into it, possibly via a syringe through a septum, the vessel optionally comprising a heating device and optionally a mixing device,
the vessel being connected to the housing such that sample addition is possible by dipping the vessel into a sample (particularly in case of e-tongue configuration) and/or without opening the housing (particularly in case of e-nose configuration), possibly such that a septum of the vessel is accessible from the outside,
A2) a feed line through which evaporated sample gas and/or sample liquid can flow away from the mixing vessel, the feed line comprising a valve, preferably a three-way valve, wherein the line is connected to the mixing vessel and an adapter arranged at a wall of the housing,
A3) a return line through which analysed sample can flow to the mixing vessel, the return line comprising a valve, preferably a three-way valve, and optionally a pump, preferably a diaphragm pump, wherein the line is connected to an adapter arranged at a wall of the housing and the mixing vessel, the pump, if present, being arranged between the valve and the mixing vessel,
A4) either a current adapter or at least one primary or secondary battery to provide current for the mixing device, if present, the heating device and the pump, if present,

B) a second detection housing comprising

B1) at least one sensor array according to the present invention, along with the necessary electronics,
B2) optionally at least one frequency counter along with the necessary electronics,

B3) either at least one adapter for wire based connection to a computer or at least one wireless connectivity device, or another indicator configured to indicate the presence of a given compound upon receiving the corresponding signal from the sensor array,

B4) either a current adapter or at least one primary or secondary battery to provide current for the sensor array along with the electronics, the frequency counter along with the electronics and the pump, if present,

C) further material comprising at least one syringe, optionally a portable nitrogen bottle, optionally connection tubes, pipes or lines for connecting the housings to each other, optionally computer adapter cables,

wherein

the two housings are connectable to each other via tubes or lines or pipes to be connected to adapters in the walls of the respective housings or directly via housing-adapters configured to fit directly with each other, for example via male/female-connectors, especially click connectors.

The kit according to the present invention and the respective parts may comprise further parts that are immediately apparent to those of ordinary skill in the art.

Of course, still a further subject matter of the present invention is a device which incorporates the parts of the kit in an already assembled matter or an assembled device which comprises the respective parts, though the parts themselves were not originally configured to be kit parts.

In one preferred embodiment, particularly for the configuration as e-tongue, of this subject matter, the fluid-tight mixing vessel A1) can be a hollow housing with at least one opening for the sample to enter the housing, configured such that upon dipping the housing with this opening into a sample to be analysed (either flowing or non-flowing) enters the housing (usually a simple hole is sufficient).

The present invention provides uniform surface-anchored metal-organic framework (SURMOF) layers with high stability on quartz crystal microbalance (QCM) sensor array, improving sensitive detection of odours even in harsh settings.

The present invention's devices, sensors and sensor systems show superior sensory efficacy in harsh gas and liquid environments, a faster sensor response time than other devices of the prior art, and high selectivity for various gas and liquid molecules. One of the most distinguishing characteristics of the present invention is that the present invention's devices, sensors and sensor systems function as two-in-one devices (e-nose and e-tongue) in a portable and small size that can detect a wide variety of molecules and their mixtures.

While the quartz crystal sensors that are used in preferred embodiments of the present provide several drawbacks that restrict their use, it was unexpectedly found in the context of the present invention that these drawbacks could be resolved by enhancing the surface with the specific SURMOFs of the present invention. It was thus unexpectedly found that the present invention's sensors and sensor arrays show even increased stability and selectivity.

In the context of the present invention, new and improved functional UiO-66-X SURMOF sensors, with X being selected from the group consisting of H, $NH_2$, $N_3$, Cl, OH, COOH, SH, NOz, $(COOH)_2$, $F_4$, nitrosyl, Br and mixtures thereof, in particular with X=NHz or Cl or $N_3$, have been prepared. Their preparation is in preferred embodiments done via a layer by layer pump method with real-time QCM control and monitoring. The devices, sensors and sensor arrays of the present invention are stable enough to stand in harsh conditions such as: 100%RH/90°C and even 18% HCl vapour over 7 h, inside water at pH between 1-7, for 2 minutes at 25°C and even 36% HCl in liquid phase for certain periods of time. Absorption kinetics of the present invention's devices, sensors, sensor arrays with UiO-66-X SURMOFs, in particular with X=$NH_2$, Cl, and $N_3$, against eight different VOCs including 18% HCl and water in gas and liquid phase have been monitored with 3 channel QCM technique. E-Nose analysis has been applied to eight different VOCs, including 18% HCl and water in gas and liquid phase using LDA, k-NN, and NNA. More than 99% discrimination accuracy was obtained in saturated vapour pressure. At low concentrations between 10 and 100 ppm, accuracy changed from 77.8% to 99.9%. The lowest detection limits depend on the type of analytes and are around 50 ppm for most VOCs.

While various programs for the analysis of data in machine learning, such as kNN, LDA, and NNA, can be (and were) written in Matlab, in particular for sensors/sensor systems with smaller physical dimension, for example as mentioned above, it is not necessary to employ any PC software or Matlab. Instead, in particular for those cases, custom programs specifically for microprocessors that allow for the collection, storage, and analysis of data from the e-nose/e-tongue can be (and were) developed and/or employed.

It was also found in the context of the present invention that, in particular but not only, NHz-side groups in UiO-66-$NH_2$ SURMOF structures enable a post-synthetic modification method for tuning the functional properties of MOFs while maintaining the underlying Zr based highly stable framework structure. This allows to tune the sensors, e.g. increase the selectivity of the highly stable UiO-66-X films for sensor applications in both gas and liquids as e-nose and e-tongue.

As advantages of the present invention, in particular the following may be mentioned:

- high stability in gas detection under high humidity and/or in harsh environments;

- high selectivity for different gas and liquid molecules due to various functional groups, in particular $-NH_2$, $-N_3$, $-COOH$, $-OH$, -nitrosyl, $-SH$, $Cl$, $-NOz$, $-(COOH)_2$, $-F_4$, $-(OH)_2$, or in particular $NH_2$, $Cl$, $N_3$;
- high sensitivity, due to the sensors with highly porous SURMOF structures with a very large active surface area around 1200 $m^2/g$;
- fast sensor response related to the highly porous structure;
- small size devices possible, in one specific exemplary embodiment preferably 3 cm by 3 cm by 5 cm, e.g. half the size of a cigarette pack;
- two in one, meaning that the devices of the present invention can function both as e-noses and as e-tongues.

The individual parts of the present invention's respective devices, sensors and sensor systems are in operative connection with each other in a customary and known manner.

The various embodiments of the present invention, e.g. - but not exclusively - those of the various dependent claims or individual embodiments described in the figures, may be combined with one another in any desired manner, provided such combinations do not contradict one another.

The embodiments of the present invention explained in more detail below with reference to the drawings (figures) represent various preferred embodiments, many of the features or embodiments shown below in individual figures can be combined with features and embodiments shown in other figures or the remainder of the description, particularly where the features are described accordingly.

Moreover, the figures are not to be construed as limiting and are not to scale. Furthermore, the figures do not contain all the features that conventional devices have, but are reduced to the features that are essential for the present invention and its understanding, for example screws, cables etc. are not shown or not shown in detail. Identical reference signs/numbers mean identical or identically acting device parts.

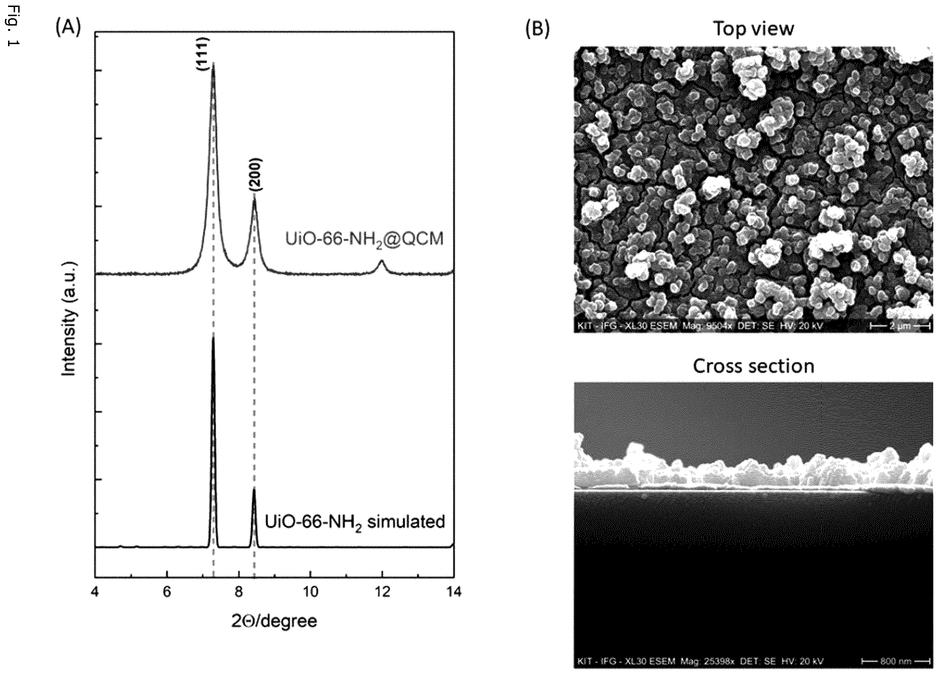

Figure 1(A) shows XRD-data recorded for UiO-66-$NH_2$ sensor according to the present invention in the above curve as well as a simulated curve on the bottom. Figure1(B) shows scanning electron microscopy images of the synthesized sensors, wherein the upper part is a top view and the lower part is a cross section. From the cross section it can be seen that the SURMOF (the light structures) covers the whole surface of the QCM (the dark area below the light structures) in a thickness of approximately 300 nm to 500 nm (prepared according to example 1).

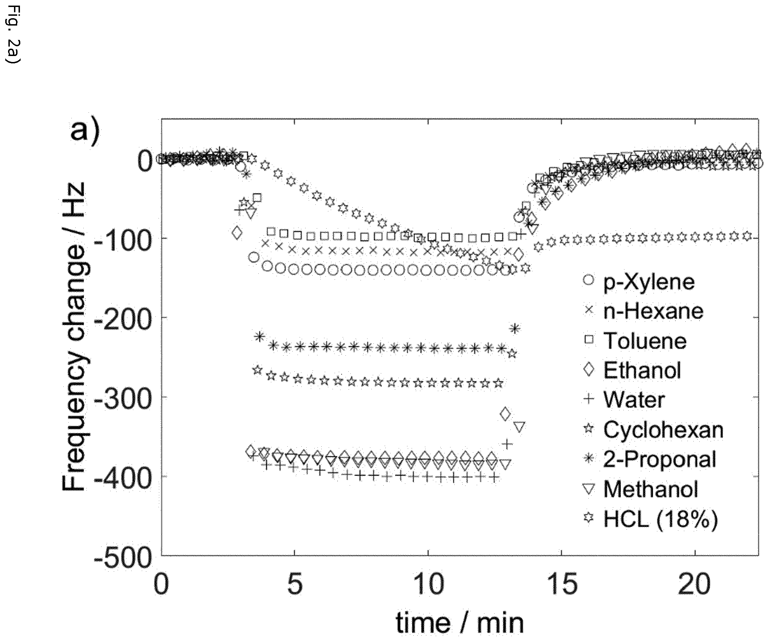

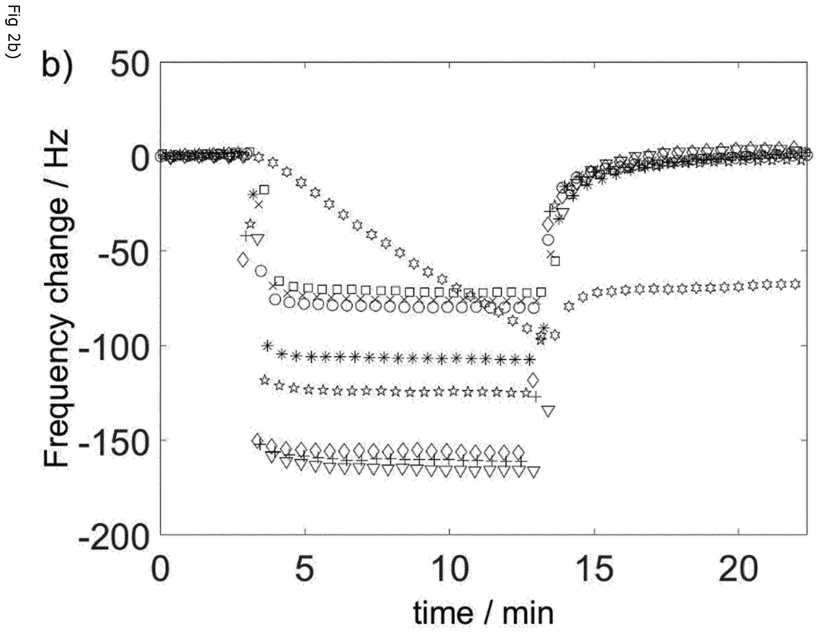

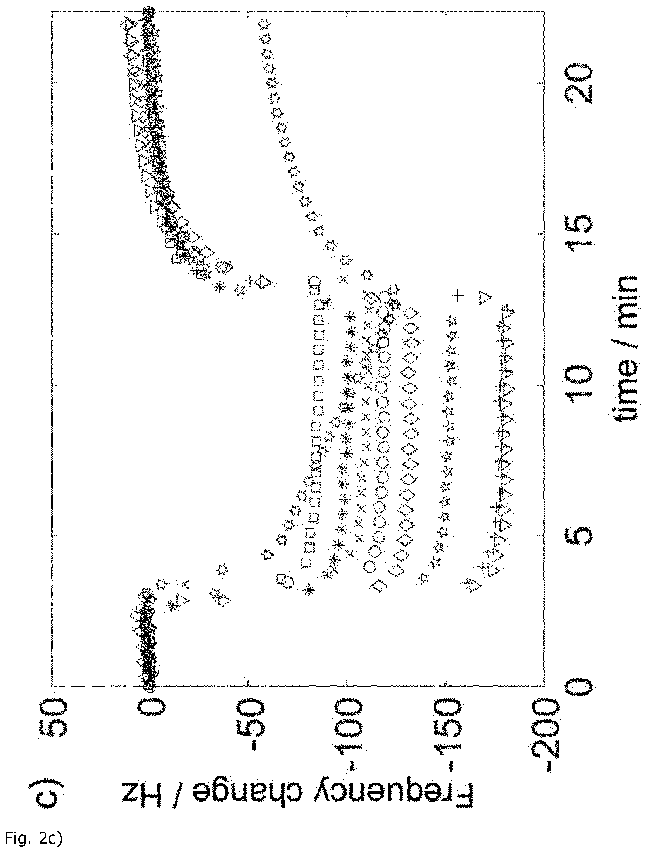

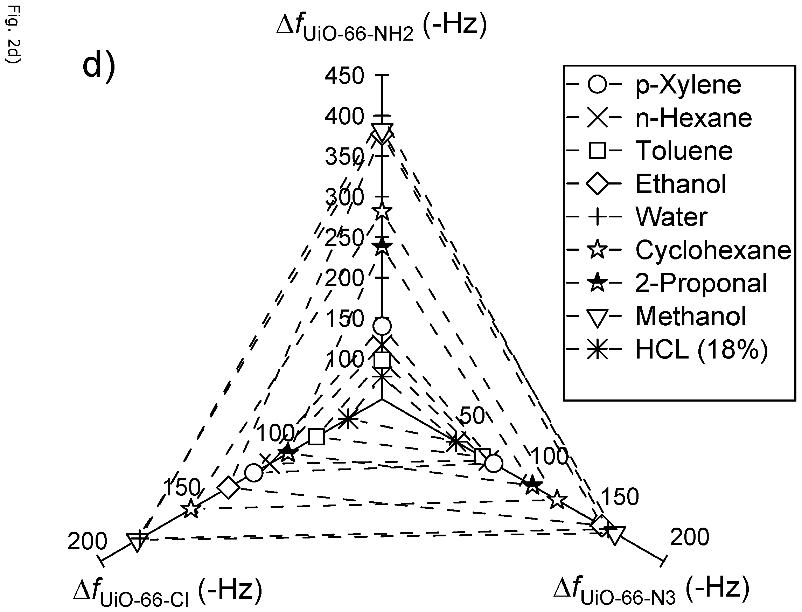

Figure 2 shows the negative QCM frequency changes as a result of mass uploads on three different functional UiO-66-X SURMOF sensors with X=$NH_2$ (Figure 2a)), X=Cl (Figure 2b)), and X=$N_3$ (Figure 2c)) when exposed to eight different VOCs and 18% HCl. Each analyte was tested with four cycles with 10-min absorption and 10-min desorption times. The response times of UiO-66-X are less than 1 min, and the radar plot displays the maximums of sensor responses against each VOC gas (Figure 2d). Thus QCM responses of three different functional UiO-66-X with X=$NH_2$ (a), X=Cl (b), and X=$N_3$ (c) against eight different VOCs and 18% HCl, while in d) the radar plot displays the maximums of sensor responses in Hz against each VOC gas at their saturated values.

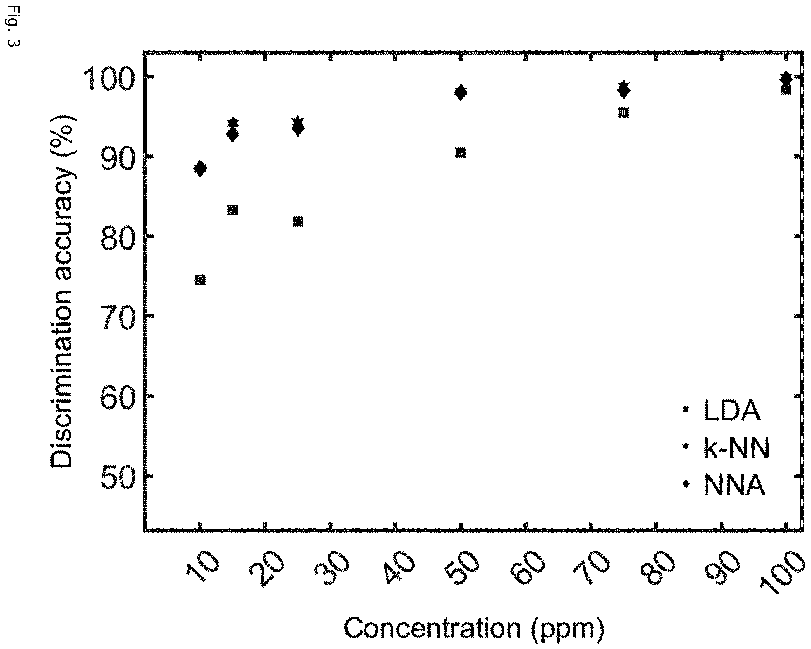

Figure 3 displays a linear fit to the change in LDA and k-NN discrimination accuracies with increasing concentration from 10 to 100 ppm. LDA discrimination accuracy increases from 74.8% to 98.4%, while k-NN discrimination accuracy increases from 89.9% to 100%.

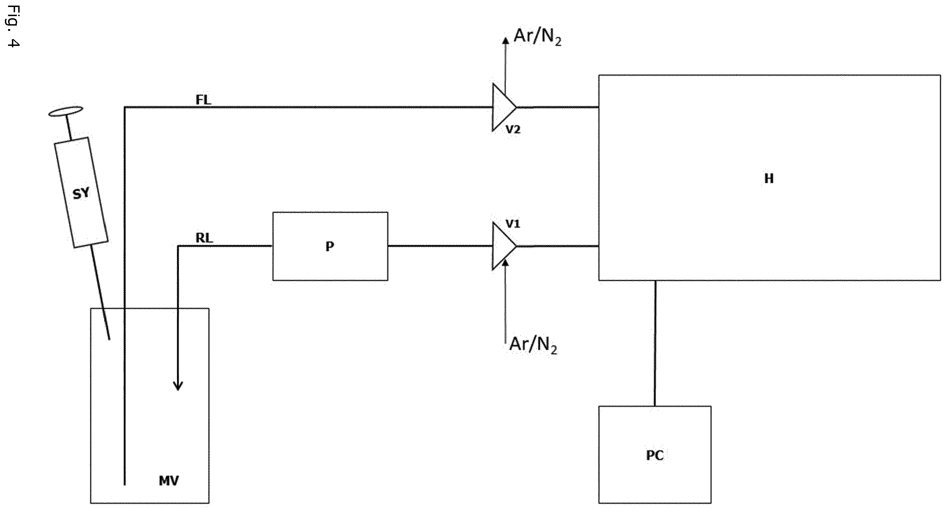

Figure 4 is a schematic illustration of a (portable) setup for an e-nose/e-tongue according to the present invention. The sample containing the molecules to be detected/examined is added into a mixing vessel **MV,** which e.g. is in the form of a plastic housing (wherein the housing is inert to the substances of the sample to be analysed, e.g. coated with polytetrafluoroethylene) or a glass vial. The addition can be done by any means capable of transferring the sample and is illustrated here with a syringe SY - it should be understood, though that the mixing vessel may also (though not illustrated here) just be dipped into/held into a sample in other equally preferred embodiments. In this mixing vessel MV analyte concentration control is possible and the sample can, particularly in case of an e-nose configuration, be evaporated by heating, preferably with a heating device like a resistive bulb heater (not shown). The fluid (evaporated gas or non-evaporated liquid) then flows along the feed line **FL** to a sensor array according to the present invention. The sensor array, preferably along with a humidity/temperature sensor, and a frequency counter are placed (together with the respective necessary electronics, e.g. printed circuit boards) in a housing **H** with a sufficient size, for example a 3D-printed one. The housing has a gas inlet to which the feed line **FL** is connected and a fluid (gas or liquid) outlet which enables the flow of the fluid through the housing . The fluid outlet is connected to the return line **RL,** along which the fluid flows back to the mixing vessel **MV.** The circulation of the fluid flow may in some preferred embodiments be facilitated by a pump **P,** like a diaphragm pump. As shown in the figure, the feed line **FL** and the return line **RL** both feature valves **V1** and **V2,** preferably three-way valves. After a fluid has flown trough the sensor array, the valve **V1** can be put in a position that the path between the housing **H** and the mixing vessel **MV** (as well as pump **P)** is blocked and the other valve **V2** can be put into a position that the feed line **FL** is blocked between the mixing vessel **MV** and the housing **H.** Then a purge fluid, e.g. nitrogen gas or argon gas (or any other suitable inert gas), can be fed into the lines and purge the volume between **V1** and **V2**; depending on the orientation of the valves, either the side of the mixing vessel or the side of the sensor array can be purged, thus enabling easy cleaning of the portable e-nose/e-tongue setup before another test is done. In some embodiments it is preferred that the sensor array is additionally covered by a head space of sufficient size (not shown) in order to minimize the volume the fluid has to flow through, to ensure sufficient contact of the fluid with the sensors and also to protect the electronic parts from the gas. Additionally, as illustrated in this figure, a computer, in this case a personal computer **PC**, can be attached to the housing **H** and the sensor array in order to facilitate analysis and evaluation of the sensor data.

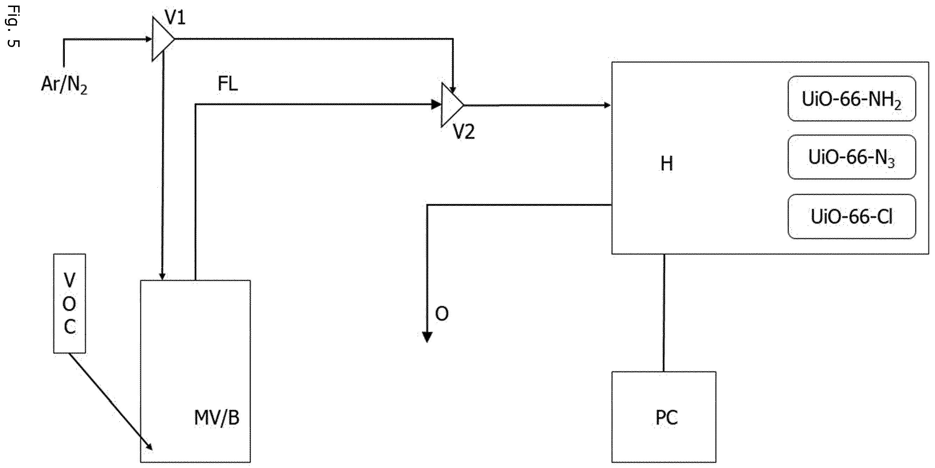

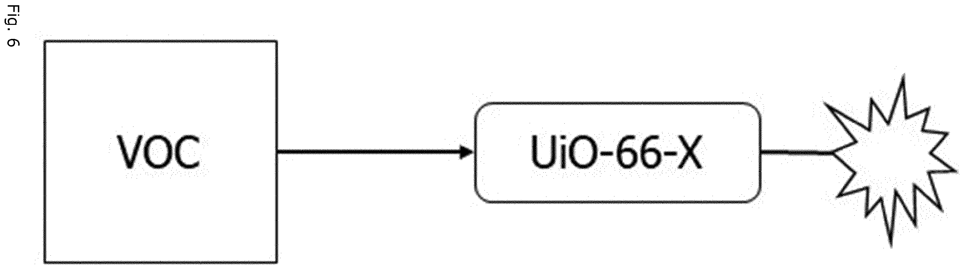

Figure 5 is a schematic illustration of a (portable) setup for an e-nose/e-tongue according to the present invention. The sample containing the molecules to be detected/examined - in this case VOC (volatile organic compounds) - in the illustrated embodiment is added into a mixing vessel **MV/B**, which in this case can be a bubbler; i.e. the VOC could be bubbled through a liquid like water, for example to remove water soluble impurities, but the vessel could also be as described with regard to figure 4 or in any other suitable form. The addition can be done by any means capable of transferring the sample, which is illustrated here with an arrow. Preferably the addition is done at room temperature or the respective give ambient temperature. The fluid containing the sample then flows along the feed line **FL** to a sensor array according to the present invention. In the embodiment shown here, three individual sensors or sensor groups are shown, each being based on only one specific MOF (illustrated are UiO-66-NH$_2$, UiO-66-N$_3$, UiO-66-Cl, which is one preferred embodiment according to the invention. But by no means restricted to this). The sensor array, possibly with additional sensors like humidity/temperature sensors, and maybe a device like a frequency counter are placed (if necessary together with the respective necessary electronics, e.g. printed circuit boards) in a housing **H** with a sufficient size, for example a 3D-printed one. The housing has a gas inlet to which the feed line **FL** is connected and a fluid (gas or liquid) outlet line **O** which enables the flow of the fluid through the housing . As shown in the figure, an inert gas supply (shown are Ar and N$_2$, though other inert gases can of course be used) is connected to the mixing vessel/bubbler **MV/B** and the feed line **FL** via valves **V1** and **V2**, preferably three-way valves. In this way the inert gas can be conducted such that it streams into/through the mixing vessel/bubbler **MV/B** and/or the feed line **FL** simply by changing the position/status of the respective valves in a known manner (similar to what is described with respect to figure 4). By that it is possible to enhance the flow of the sample to the sensor arrays in the housing **H** and/or purging the sensor array of residual past samples or other fluids prior to the sample entering the array. As above, in some embodiments it is also possible here that the sensor array is additionally covered by a head space of sufficient size (not shown). Additionally, as illustrated in this figure, a computer, in this case a personal computer **PC**, can be attached to the housing **H** and the sensor array in order to facilitate analysis and evaluation of the sensor data. It should be noted, that the housing H is optional and it is also possible to present the sensors or sensor groups without such a housing, for example placed (mounted) on a tray or the like. Similarly, it should be noted that the sample provision and the sample feeding to the sensors/sensor groups is not necessarily to be done like described here, but can be done way more simple (e.g. like illustrated in figure 6), for example such that the samples are directly applied to the sensors/sensor groups.

Figure 6 shows a very basic set-up according to the present invention. In this figure it is illustrated that a sample (in this case VOC) is applied (illustrated by the arrow) to a sensor or sensor group/array according to the present invention (of course being in an manageable form, e.g. in a small housing or on a base plate etc.). The sensor or sensor group/array interacts with the sample, i.e. the molecules to be detected (if present) adsorb/absorb onto/into the MOF-structure and the sensor registers this. The sensor then indicates the presence of the detected compound in any manner, here illustrated with a star, for example by an audible signal, or a light signal or the like. The signal can be emitted directly form the sensor or sensor group/array, for example by a coupled loudspeaker or a lamp but does not need to be. It is also possible for the signal (or a precursor to the signal) to be transferred to another device, for example a smart device (smartphone or the like) via cable, Wi-Fi, Bluetooth or similar technologies.

This figure also indicates that a PC is not a necessity in the context of the present invention.

The invention is now described in more detail with reference to the following non-limiting examples. The following exemplary, non-limiting examples are provided to further describe the embodiments presented herein. Those having ordinary skill in the art will appreciate that variations of these examples are possible within the scope of the invention.

Example 1:

Example 1.1 - surface preparation:

AT-quartz crystals (0.3-mm-thick) coated with a gold layer QSX 301 (100-nm-thick) (Q-Sense, Frölunda, Sweden) with a resonance frequency at 4.950.05 MHz were first functionalized by immersing in an ethanolic solution of 11-mercapto-undecanol (MUD), producing a self-assembled monolayer (SAM) with exposed OH-terminated stem (i.e. a layer of organic spacer molecules is produced).

Example 1.2 - synthesis of surface-anchored metal-organic frameworks (SURMOFs):

The functionalized gold-coated QCM sensors were loaded in openQCM (Novatech, Italy) with a Teflon liquid cell. Kalrez (Dupond, USA) type O-ring was employed for DMF-based solutions. A temperature of 80°C was maintained throughout the procedure (unless otherwise indicated). In the first step, 1 mL of metal ion mixture (1 M of $ZrCl_4$ dissolved in DMF) was pumped into a liquid cell at 1 mL/minute, providing enough time to complete the reaction with the functionalized surface, namely the immersion time in the metal ion solution was 45 minutes, and then rinsed with DMF three times by pumping (at 5 mL/minute) through from an individual channel, namely washing was conducted for 5 minutes. After that, 1 mL of MOF linker solution (0.5 M of a 2-aminoterephthalic acid ($BDC-NH_2$) dissolved in DMF) was rapidly pumped into the liquid cell at 1 mL/minute, providing enough time for linker molecules to bind with reacted metal ions remaining on the surface to complete the reaction with the functionalized surface, namely the immersion time in the linker solution was 45 minutes. Finally, the deposition cycle was completed by rinsing in pure DMF three times by pumping (at 5 mL/minute) through from another individual channel, namely washing was conducted for 5 minutes. The last four steps (provision of metal ion solution / rinsing / provision of linker molecule solution / rinsing) were repeated under the same conditions 30 times to develop 30 SURMOF layers, and the number of growth cycles adjusted the overall thickness of deposited thin films. All data were analysed using an open-source program written in Python.

The synthesis parameters mentioned above, including temperature, injection and exposure time (waiting inside the liquid cell), flow rates, concentration of metal ion/cluster, as well as organic linker and rinsing solutions, directly affect the growth kinetics of $UiO-66-NH_2$ SURMOF films and thus the quality of the resulting SURMOF; the above mentioned specific parameters lead to particularly good results and therefore represent one (of several) particular preferred embodiment of the present invention. The growth of these films on MUD SAMs was monitored using quartz crystal microbalance with dissipation (QCM-D). Here $UiO-66-NH_2$ SURMOF films were prepared with a layer-by-layer (LBL) method using a high-temperature QCM-D liquid cell. In this particular case, a high concentration was chosen as C1 for a very small injection time (0.5 s) for Zr metal cluster and linker solutions with continuous flow and 4 min rinsing with 4 rpm pumping speed with DMF in between through MUD-coated QCM substrate for each cycle inside the liquid cell for a fast SURMOF film formation. Typically, 60 $\mu g/cm^2$ (e.g., 92 $\mu g$ with 1.54 $cm^2$ Qsense QCM substrate surface area) $UiO-66-NH_2$ thin mass upload has been obtained with 30 cycles. LBL synthesis started at 100 °C and decreased stepwise (-10 C/h) to 50°C to identify the temperature effect on growth kinetics. The speed of mass deposition changes quasi-linearly down to 70 °C, followed by a temperature decrease. The magnitude of pump effects also decreases with decreasing temperature.

X-ray diffraction (XRD) data recorded for $UiO-66-NH_2$ sensor revealed that these SURMOFs are of high quality and exhibit a high degree of orientation. XRD peak positions at for (100) and at for (200) and intensities were fully consistent with expectations (see also figure 1a). Scanning electron microscopy (SEM) imaging was conducted to analyse the topography of the synthesized sensors. Figure 1b displays SEM images of the top surface and cross-section view, which show that SURMOF film covers the whole QCM surface with approximate thickness of 300 nm to 500 nm.

Example 1.3 - SURMOF re-functionalization process:

The re-functionalization process of UiO-66-X undergoes two steps. The first step is the same for all functionalization processes, whereas the second varies based on the selected functional group ($N_3$, Cl, OH, etc.).

*First step:*

SURMOF-based sensors as prepared above were immersed in 15 mL of aqueous $NaNO_2$ (0.5 mol/L) and cooled in an ice bath to 0°C. Then, 3 mL of HCl in 3 mL of water were added dropwise to the solution with SURMOF at 0°C under rigorous continued stirring at the same temperature for 15 min. Then the SURMOF-based sensor was rinsed with water, immersed into water for 1 min and rinsed again before second step.

*Second step:*

1- UiO-66-N$_3$

Following the first step, in the case of UiO-66-N$_3$, the washed sample was immersed into 20 mL aqueos solution of 1.3 g NaN$_3$ (1mol/L) precooled to 0°C in ice bath. The reaction mixture was warmed to room temperature and stirred for another 2 h. Sensors were washed thrice with water, then twice with ethanol, and finally twice with acetone. Sensors were dried using N$_2$ gun and then kept in an oven at 40°C overnight.

2- UiO-66-Cl

UiO-66-Cl was prepared using the following method. Typically, aqueous molar CuCl solution was prepared by adding 1.98 g of CuCl to 20 mL of water. The solution was then cooled to 0°C using an ice bath. The SURMOF was added to the cooled solution, warmed to room temperature, and then stirred for 2 h. After that, the SURMOF was rinsed with water, placed in a beaker containing water for 2 min, rinsed twice, and dried.

3- UiO-66-OH, -COOH, -Br,- SH, -nitrosyl

UiO-66-derivatives with the functional groups -OH, -COOH, -Br,- SH, -nitrosyl, -NOz, were prepared from the amino-functionalized SURMOF using well known reactions and the respective products were obtained.

4- UiO-66-(COOH)$_2$, -F$_4$, -(OH)$_2$

UiO-derivatives having more than one functionality on each linker group were prepared similarly to the above, with the exception that the linker molecules were not monofunctional ones (like e.g. 2-aminoterephthalic acid) but had two or more functionalities in addition to the acid groups of the terephthalic acid.

Example 2 - gas and liquid molecule detection tests:

Ferrocene molecules in gas and liquid phases were used as the initial test of the system.

Example 2.1 - gas-phase test:

Saturated vapour pressure of ferrocene at room temperature was used for the test. A diaphragm pump circulates the saturated vapour of ferrocene molecules from the glass vial to SURMOF-coated sensor located inside openQCM system. To clean/recycle the coated sensor, N$_2$ gas was introduced into the openQCM cell, while the inlet and outlet positions were controlled with programmable electronic valves. OpenQCM system was used to measure the frequency change due to exposure of UiO-66-NH$_2$ SURMOF-coated sensor to ferrocene molecules (concentration 12 ppm at the saturated vapour pressure of 1.191 ± 0.026 Pa).
It was observed that in less than 10 min, ferrocene was adsorbed on the surface due to exposing the fresh film surface to a ferrocene concentration of 12 ppm at a saturated vapour pressure of 1.191 ± 0.026 Pa. After that, ferrocene molecules diffused linearly inside SURMOF porous cavities for the next 20 min. After changing the gas flow direction for 25 min using Nz gas, ferrocene molecules were swept away quickly from SURMOF surface and cavities by diffusing out, showing that this is a repeatable and reversible process.

Example 2.2 - liquid phase test:

To accomplish this test, ferrocene powder was dissolved with different concentrations (8, 12, 15, 20, 25, and 30 mg/mL) in n-hexane solvent (30 mg/mL of ferrocene manifests maximum soluble concentration inside n-hexane).
A two-channel ISMATECH Cole-Parmer GmbH, Wertheim (Germany) peristaltic pump was employed to deliver ferrocene and washing (n-hexane) solutions to the synthesized SURMOF inside the Teflon OpenQCM cell (Novatech Co., Italy). The changes in resonance frequencies were recorded with a program written in Python. In a QCM measurement in the gas or liquid phase, the relationship between the resonance frequency changes of an oscillating quartz crystal and mass upload is linear according to the Saurbrey equation, as shown in Eq. 1.

$$\Delta m = -C \frac{\Delta f}{n} \qquad (1),$$

where $\Delta m$ is the change in the mass, $\Delta f$ is the resonance frequency change, and C is the sensitivity constant related to the properties of oscillating quartz QCM substrate. For a 5 MHz crystal, C equals 17.7 $ng/(cm^2.Hz)$. The parameter n is the number of the odd harmonic and can be 1, 3, 5, 7, etc. This equation allows us to calculate the mass upload of VOC gasses or liquid absorption on the surface of a QCM crystal during gas or liquid tests. The loaded ferrocene value was determined by converting the frequency values into mass.

It was observed that the upload process lasts about 3 h, while the desorption process occurs in less than 10 min. Accordingly, the ferrocene upload is a slow process compared to the desorption procedure because ferrocene molecules are predominantly adsorbed on SURMOF surface. Moreover, the concentration dependence exhibits a quadratic behaviour, indicating the saturation effect.

The mass of loaded ferrocene molecules can be calculated using QCM surface area (1.539 $cm^2$) and coated SURMOF mass (10.78 $\mu$g).

Example 3 - advanced tests:

*a) Hot water and HCl vapour test measurement in the gas phase:*

The modified system was examined at saturated hot water vapour (@100% relative humidity) conditions between 25 °C and 90 °C for 45 min and 18% HCl for 6 h. The relative humidity is proportional to the concentration of water molecules inside the cell. The concentration is inversely related to the environmental temperature according to general gas law as long as the pressure and volume are kept constant. Consequently, the mass uptake drops with increasing temperature due to a lower concentration of water molecules inside the cell. XRD results before and after high humidity/HCl tests demonstrated that functionalized UiO-66-X sensors remain structurally stable at high humidity and 18% HCl for 6 h.

*b) absorption tests under saturated vapour pressure of some volatile organic compounds (VOCs):*

In a 4-channel QCM type e-Nose experimental setup for VOC measurements with three different functionalized UiO-66-X SURMOFs with the gas delivery setup were conducted. The test cell was constructed from four openQCM Teflon cells connected in series with Teflon tubes with a radius of 1 mm. Three of them were used for each functional UiO-66-X sensor (X: NH2, N3, and Cl) and one for the unmodified bare QCM sensor with a gold surface as a control channel. Two mass flow controllers are connected in parallel between Argon (Ar) source and test cell. One of them is used to flash the test cell with Ar for purging the residue of VOC inside, and it also directly controls the Ar flow during the dilution of VOC concentration. The other mass flow controller determines the rate of flow passing through the liquid inside the VOC bubbler to transport the saturated VOC gas just above the surface to the test cell.

The concentration of VOC inside the test cell was obtained by multiplying the saturated concentration value with the ratio of flow rates of these two mass flow readings. The saturated values of each gas were obtained from the specs of each VOC at 25°C.

Table 1 lists the calculated saturation concentrations in mmHg and ppm for eight different VOCs and 18% HCl used for the absorption tests to obtain QCM sensing data for e-Nose analysis. The same open QCM-D Teflon liquid cells used for high-temperature SURMOF synthesis were also used for VOC tests in gas and liquid phases.

In the liquid phase, a 4-channel Ismatec reglo peristaltic pump was used to control the flow rate. The temperature was kept constant at 20°C to prevent small temperature fluctuations during VOC test measurements.

Table 1. The calculated concentrations under saturated pressures of eight different VOCs and HCl used for gas absorption measurements at 25°C

|  | $p_{sat}$ [mm HG] | $c_{sat}$ [ppm] |
|---|---|---|
| ethanol | 52.27 | 68776.3 |
| water | 18 | 23531.6 |
| cyclohexane | 89.08 | 117210.5 |
| 2-propanol | 38.52 | 50684.2 |
| methanol | 114.25 | 150328.9 |
| p-xylene | 9.81 | 12907.9 |
| toluene | 21 | 27631.6 |
| n-hexane | 138.61 | 182381.6 |

(continued)

|  | p_sat [mm HG] | c_sat [ppm] |
|---|---|---|
| 18% HCl (vapor) | 0.0903 | 119 |

Eight different VOCs and 18% HCl have been tested at high and low concentrations. The first absorption measurement was conducted at a high concentration under their saturated pressures given in Table 1. Each VOC gas was injected into the gas test cell for 10 min for absorption and then flashed with inert Ar gas for 10 min for the desorption process. This absorption and desorption process cycle was repeated four times to test repeatability. The second measurement was performed using six different low concentrations between 10 and 100 ppm (10, 15, 25, 50, 75, and 100 ppm) to identify the limit of detection (LOD) of functional UiO-66-X SURMOF sensor films. The gas injection time was kept again to 10 min for absorption for quick tests toward practical applications. For desorption, Ar rinsing time was chosen as 20 min. Each analyte was tested with four cycles with 10-min absorption and 10-min desorption times. The response times of UiO-66-X are less than 1 min; the results are shown in figure 2.

The absorption tests at high concentrations indicate that response times of sensors are less than 1 min and quickly reach saturation and return back to initial background values in 10 min. NHz-functionalized UiO-66-X sensor exhibits higher responses (more than two times) than $N_3$- and Cl-functionalized sensors. Cl functionalized sensor has a bit more responses compared to $N_3$-functionalized one. All three sensors indicate the highest response to water, methanol, and ethanol, while less responses to toluene, n-hexane, and 18% HCl since HCl increases linearly but does not reach saturation. In addition, HCl molecules do not release quickly in 10 min; however, reaching the initial state for all functionalized sensors takes a long time.

*c) absorption measurements under low concentrations between 10 and 100 ppm:*

The second measurement was conducted at six different low concentrations between 10 and 100 ppm (10, 15, 25, 50, 75, and 100 ppm) to test the lowest limit of sensing of functional UiO-66-X SURMOF sensor films. The gas injection time was chosen as 10 min for absorption, but Ar rinsing time was increased to 20 min for desorption to test sensor response time. QCM responses of three different functional UiO-66-X films with X=$NH_2$, Cl, and $N_3$, against p-xylene, water, toluene, ethanol, 2-propanol, n-hexane, cyclohexane, methanol, and 18% HCl at different low concentrations (10-100 ppm) were also measured and correlated with expectations from the above.

The sensitivities of each UiO-66-X sensor can be defined as the slopes of plots with QCM frequency changes versus concentration for each sensor response, as shown in Table 2. Each sensor has a different slope for different gas molecules because SURMOF material is loaded with different concentrations and functional groups.

Table 2. Sensor names, and the calculated sensitivity a) and limit of detections b) of individual sensors.

| a) sensitivity in Hz/ppm | | | |
|---|---|---|---|
|  | S1 - UiO-66-$NH_2$ | S2 - UiO-66-Cl | S3 - UiO-66-$N_3$ |
| **2-propanol** | 0.0028 | 0.0021 | 0.0020 |
| **cyclohexane** | 0.0024 | 0.0011 | 0.0013 |
| **ethanol** | 0.0055 | 0.0023 | 0.0019 |
| **HCl (18%)** | 0.9784 | 0.3633 | 0.5503 |
| **n-hexane** | 0.0007 | 0.0004 | 0.0006 |
| **methanol** | 0.0025 | 0.0011 | 0.0012 |
| **toluene** | 0.0036 | 0.0026 | 0.0031 |
| **water** | 0.0169 | 0.0067 | 0.0076 |
| ***p*-xylene** | 0.0108 | 0.0060 | 0.0090 |
| b) limit of detection (LOD) in ppm | | | |
|  | S1 - UiO-66-$NH_2$ | S2 - UiO-66-Cl | S3 - UiO-66-$N_3$ |
| **2-propanol** | 96.0 | 79.1 | 190.8 |
| **cyclohexane** | 79.5 | 115.7 | 148.5 |
| **ethanol** | 705.4 | 50.7 | 191.1 |

(continued)

| b) limit of detection (LOD) in ppm | | |
|---|---|---|
| | S1 - UiO-66-NH$_2$ | S2 - UiO-66-Cl | S3 - UiO-66-N$_3$ |
| **HCl (18%)** | 0.4 | 0.3 | 0.6 |
| **n-hexane** | 439.3 | 331.1 | 715.7 |
| **methanol** | 66.1 | 287.3 | 200.4 |
| **toluene** | 131.7 | 47.3 | 82.5 |
| **water** | 19.0 | 24.0 | 35.5 |
| **p-xylene** | 58.3 | 25.0 | 44.4 |

All functional UiO-66-X sensors showed the largest sensitivity to HCl due to very low saturated vapour pressure, as given in Table 2. UiO-66-NH$_2$ was more sensitive compared to other functionalized sensors. All sensors showed second the highest sensitivity to water among the VOCs. The lowest sensitivity was observed for n-hexane, followed by cyclohexane. The same sensor exhibited different sensitivities for different analytes due to different affinities resulting from different functional sites. HCl sensitivity ranged between 0.0007 and 0.6784 Hz/ppm for UiO-66-NH$_2$ sensors, between 0.0004 and 0.3634 Hz/ppm for UiO-66-Cl sensors, and between 0.0006 and 0.5503 Hz/ppm for UiO-66-N$_3$ sensors. The sensitivities of UiO-66-NH$_2$ sensor for 2-propanol, cyclohexane, ethanol, HCl, n-hexane, methanol, toluene, water and p-xylene were 0.0028, 0.0024, 0.0055, 0.6784, 0.0007, 0.0025, 0.0023, 0.0169, and 0.0108 Hz/ppm, respectively. For UiO-66-HCl sensor, sensitivities ranged between 0.0004 Hz/ppm, and 0.633 Hz/ppm for n-hexane, and HCl, respectively. For UiO-66-N$_3$ sensor, the sensitivities ranged between 0.0006 and 0.5503 Hz/ppm for n-hexane, and HCl, respectively. Most importantly, different functional groups on SURMOF structures result in different sensitivities for each analyte. This feature is important for distinguishing the analytes via machine learning methods, such as LDA, k-NN, and NNA.

The limits of detection (LOD, Table 2) of individual sensors were calculated by three times the standard deviation divided by sensitivity. We used the average value of the standard deviation of each individual sensor determined from the baselines before the analyte exposure began. The average values of standard deviations were 0.23 Hz for UiO-66-NH2 sensor, 0.10 for UiO-66-Cl sensor, and 0.28 for UiO-66-N3 sensor. UiO-66-Cl sensor showed the lowest LOD due to the lowest standard deviation.

*d) absorption measurements in the liquid phase:*

Absorption measurements in the liquid phase were applied to eight different pure liquids, including water and 36% HCl, at their highest concentrations. Pure ethanol was used as the reference background solution during the liquid phase absorption and desorption processes. In the liquid phase, 10 min of pure ethanol was sent to clean the liquid cell and prepare functional UiO-66-X sensors for the next absorption test. The test liquids were sent for 10 min long to the liquid cell for absorption measurements. Then, ethanol was sent again for 10 min to clean and exchange the test liquid totally to prepare sensors for the absorption process.

All sensor responses were stable in the end. The highest absorption responses were against HCl and water, while the lowest responses were against toluene and p-xylene. However, the functional UiO-66-X sensor showed a positive frequency effect on toluene, n-hexane, and p-xylene due to different viscosity mass effects of each liquid against QCM oscillations.

Table 3: Viscosity values of liquids

| liquid | viscosity [mPa s] at room temperature |
|---|---|
| 2-propanol | 2.37 |
| water | 1.67 |
| HCl | 1.5 |
| ethanol | 1.04 |
| n-hexane | 0.3 |
| toluene | 0.6 |

(continued)

| liquid | viscosity [mPa s] at room temperature |
|--------|----------------------------------------|
| p-xylene | 0.6 |

The mass effect of the liquid (Kanazawa effect) on the frequency shift or positive shifts in the resonance frequency of a quartz crystal arises from some perturbations in the mechanical damping properties of quartz crystal and energy dissipation to the viscous liquid environment during oscillation. This indicates that the measured dissipation change is a function of the coupling between the oscillating sensor and surroundings.

Example 4 - electronic nose analysis results:

The next section presents the e-nose discrimination analysis results using LDA, k-NN, and NNA models for VOC measurements at the saturated vapour pressure concentration and at six different low concentrations (10-100 ppm). In addition, e-tongue discrimination analysis results are presented using LDA, k-NN, and NNA models for liquid phase measurements for six different analytes, including 2-propanol, n-hexane, toluene, p-xylene, water, and 36% HCl.

*4.1 - data analysis and classification methods:*

The response of functionalized UiO-66-X sensors differs for each VOC and functions as a fingerprint for each type of gas, allowing them to be employed in e-nose and e-tongue applications. This section includes the discrimination analysis results using linear discriminant analysis (LDA), where the ratio of variances between classes and inside the classes is maximized, k-Nearest Neighbour (k-NN) with k=10 nearest neighbour model where an unknown data is classified according to the nearest distance of its 10 nearest neighbours, and Neural Network Analysis (NNA) techniques with one layer with 25 size and lambda zero RELU active. Standardized data based on scripts written in MATLAB are presented for different VOCs (Table 2).

*a) e-Nose data analysis for UiO-66-X sensors under saturated vapour pressure of VOCs:*

The data taken from a saturated region of absorption/desorption curves given in Figure 2 were used for the discrimination analysis of VOC data. A 10-fold cross-validation threshold was employed for classification using 5230 individual observations. 10% of the data was set aside for testing. Consequently, 4707 observations were used for the training set, and 523 were utilized for comparing the discrimination accuracies obtained with LDA, k-NN, and NNA models separately.

94.9% discrimination was obtained in the first LDA component and 5.1% in the second LDA component. With a confusion matrix result of LDA model with 96.5% test discrimination accuracy a 30.9% confusion was observed between HCl and n-hexane since HCl data hit n-hexane during the linear increase in HCl response of sensors. With k-NN model, 99.8% discrimination accuracy was calculated. A 99.2% discrimination accuracy was obtained with NNA model. The confusion between HCl and n-hexane is very small compared to LDA model. K-NN provides the highest discrimination among the three models used for e-nose analysis.

*b) e-Nose data analysis for UiO-66-X sensors under low concentrations (10-100 ppm):*

The functional UiO-66-X (X=NH2, Cl, and N3) sensors were also tested under six different low concentrations between 10 and 100 ppm (10, 15, 25, 50, 75, and 100 ppm).

During e-nose analysis with all three models (LDA, k-NN, and NNA), 10-fold calculations were conducted for all low concentrations between 10 and 100 ppm. For example, 10 test sets were used with 2002 observations (1800 training size and 200 test size).

With two-dimensional plots of LDA with a 95% confidence ellipse of frequency changes of three functional UiO-66-X sensors against all nine VOC analytes, including water and 18% HCl vapour at 25 ppm, typically, 97.3% discrimination accuracy was obtained with LDA with the confusion matrix. A discrimination with 99.9% accuracy was obtained from k-NN model. With NNA model, 99.7% discrimination accuracy was calculated.

Further, an e-nose analysis of the functional UiO-66-X sensor array at 100 ppm using three different models, including LDA, k-NN (k=10), and NNA (with 25 single layer size and RELU activated) was done. LDA gave a 95% confidence ellipse of frequency changes of three functional UiO-66-X sensors against all nine VOC analytes, including water and 18% HCl vapour at 100 ppm. A 97.3% discrimination accuracy was obtained with LDA. A discrimination with 99.9% accuracy was obtained from k-NN. With NNA model, 99.7% discrimination accuracy was calculated.

A linear dependence was observed when the concentration was up to 100 ppm. K-NN and NNA provided better discrimination accuracies compared to LDA. The linear fit to the change in LDA and k-NN discrimination accuracies with increasing concentration from 10 to 100 ppm is also illustrated in figure 3. LDA discrimination accuracy increases from 74.8% to 98.4%, while k-NN discrimination accuracy increases from 89.9% to 100%.

Example 4 - e-tongue analysis results:

In this section, e-tongue analysis is presented.

e-tongue analysis of the functional UiO-66-X sensor array in the liquid phase was conducted using three different models (LDA, k-NN (k=10), and NNA). LDA with a 95% confidence ellipse of frequency changes of three functional UiO-66-X sensors against n-hexane, 2-propanol, toluene, p-xylene, water, and 36% HCl was obtained. A 99.6% discrimination accuracy was obtained with LDA.

A discrimination with 99.5% accuracy was obtained from k-NN model. With NNA model, 99.9% discrimination accuracy was calculated. Accordingly, NNA model provides the best accuracy among the three models.

In summary, it was shown that the sensors and sensor arrays according to the present invention are very well suited for the detection and discrimination of molecules, particularly those selected from the group consisting of ethanol, water, cyclohexane, 2-propanol, methanol, p-xylene, toluene, n-hexane and mixtures thereof.

## Claims

1. Sensor for the detection of molecules based on a surface anchored metal organic framework comprising or consisting of

   - a sensor substrate, and
   - a metal organic framework of UiO-66 or UiO-66 derivatives coated onto at least one part of the surface of the sensor substrate.

2. Sensor according to claim 1, **characterized in that** the sensor substrates are quartz-crystal microbalance sensors.

3. Sensor according to claim 1 or 2, **characterized in that** the metal organic framework is selected from the group consisting of UiO-66, UiO-66-NH$_2$, UiO-66-N$_3$, UiO-66-Cl, UiO-66-OH, UiO-66-COOH, UiO-66-SH, UiO-66-NO$_2$, UiO-66-(COOH)$_2$, UiO-66-F$_4$, UiO-66-(OH)$_2$, UiO-66-nitrosyl, UiO-66-Br and mixtures thereof, preferably UiO-66-NH$_2$, UiO-66-N$_3$, UiO-66-OH, UiO-66-COOH, UiO-66-SH, UiO-66-nitrosyl or UiO-66-Cl, more preferably UiO-66-NH$_2$, UiO-66-N$_3$ or UiO-66-Cl and in some embodiments in particular UiO-66-NH$_2$.

4. Sensor according to any one of the preceding claims, **characterized in that** the metal organic framework is connected with the surface of the sensor substrate via organic spacer molecules, preferably selected from the group consisting of: 11-mercapto-undecanol, 16-mercaptohexadecanoic acid, 11-(triethoxysilyl)undecanal, 1-decanethiol and mixtures thereof, more preferably selected from 11-mercapto-undecanol, 16-mercaptohexadecanoic acid, 11-(triethoxysilyl)undecanal, 1-decanethiol, in particular 11-mercapto-undecanol, wherein the organic spacer molecules preferably form a monolayer, in particular a self-assembled monolayer.

5. Process for preparing sensors according to any one of the preceding claims comprising or consisting of the steps of:

   i) providing a sensor substrate,
   ii) applying an organic spacer onto the sensor substrate,
   iii) applying, layer-by-layer, a metal organic framework with the following sub-steps of

      iii)a) applying a metal solution, preferably by dipping the coated sensor substrate into a metal solution,
      iii)b) then applying a linker solution, wherein the linker has amino-functionality, preferably by dipping the product of step iii)a) into the linker solution,
      iii)c) repeating a) and b) for a specified number of times, preferably 20 to 40 times, in particular 30 times;

   iv) optionally, if the linker has precursor-functionality, in particular amino-functionality, subsequently substituting at least one, preferably all, the NHz-functional groups of the UiO-66 base structure with other functional groups, preferably those selected from the group consisting of -N$_3$, -Cl,- -COOH, -OH, -SH, -nitrosyl, -Br, in particular -Cl or -N$_3$.

6. Sensor array comprising or consisting of,

    A) at least one sensor according to any one of claims 1 to 4 or prepared according to claim 5, or
    B) two or more different sensors according to any one of claims 1 to 4 or prepared according to claim 5.

7. Sensor array according to claim 6, **characterized in that** the sensor array comprises
C) further sensors based on other metal organic frameworks, particularly based on chiral metal-organic frameworks selected from the group consisting of Cu2(DCam)2(dabco), Cu2(DCam)2(BiPy), Cu2(DCam)2(BiPyB), respectively, and/or achiral metal-organic frameworks selected from the group consisting of HKUST-1, Cu(BDC), Cu(BPDC).

8. Electronic nose or electronic tongue comprising:

    i) a means for receiving a fluid to be analysed and supplying the fluid to a detection region, preferably a cavity,
    ii) one or more sensors according to any one of claims 1 to 4 or prepared according to claim 5 or sensor arrays according to any one of claims 6 and 7 arranged in the detection region and configured to come into contact with the fluid,
    iii) a means for evaluating the sensor data,
    iv) a means for outputting the evaluated data.

9. Process for detecting and discriminating substances or mixtures comprising or consisting of substances, comprising

    I) providing a substance or substance mixture,
    IIa) passing the substance or substance mixture over one or more sensors according to any one of claims 1 to 4 or prepared according to claim 5 or sensor arrays according to any one of claims 6 and 7, or
    IIb) applying the substance or substance mixture to an electronic nose and/or electronic tongue according to claim 8,
    III) evaluating the sensor signals, preferably with an algorithm, particularly preferably with a k-nearest algorithm,
    IV) outputting and/or storing of the result of evaluation step III).

10. Process according to claim 9, wherein the substances are selected from the group consisting of ethanol, water, cyclohexane, 2-propanol, methanol, p-xylene, toluene, n-hexane and mixtures thereof.

11. Use of a one or more sensors according to any one of claims 1 to 4 or prepared according to claim 5 or sensor arrays according to any one of claims 6 and 7 or an electronic nose and/or electronic tongue according to claim 8 for the detection and discrimination of substances, preferably selected from the group consisting of ethanol, water, cyclohexane, 2-propanol, methanol, p-xylene, toluene, n-hexane and mixtures thereof.

12. Portable detection kit for the detection and discrimination of substances comprising:

    A) a first sample housing comprising in its interior

        A1) a fluid-tight mixing vessel configured to allow a sample to flow through or to be added into it, possibly via a syringe through a septum, the vessel optionally comprising a heating device and optionally a mixing device, the vessel being connected to the housing such that sample addition is possible by dipping the vessel into a sample and/or without opening the housing, possibly such that a septum of the vessel is accessible from the outside,
        A2) a feed line through which evaporated sample gas and/or sample liquid can flow away from the mixing vessel, the feed line comprising a valve, preferably a three-way valve, wherein the line is connected to the mixing vessel and an adapter arranged at a wall of the housing,
        A3) a return line through which analysed sample can flow to the mixing vessel, the return line comprising a valve, preferably a three-way valve, and optionally a pump, preferably a diaphragm pump, wherein the line is connected to an adapter arranged at a wall of the housing and the mixing vessel, the pump, if present, being arranged between the valve and the mixing vessel,
        A4) either a current adapter or at least one primary or secondary battery to provide current for the mixing device, if present, the heating device and the pump, if present,

    B) a second detection housing comprising

B1) one or more sensors according to any one of claims 1 to 4 or prepared according to claim 5 or sensor arrays according to any one of claims 6 and 7, along with the necessary electronics,

B2) optionally at least one frequency counter along with the necessary electronics,

B3) either at least one adapter for wire based connection to a computer or at least one wireless connectivity device, or another indicator configured to indicate the presence of a given compound upon receiving the corresponding signal from the sensor array,

B4) either a current adapter or at least one primary or secondary battery to provide current for the sensor array along with the electronics, the frequency counter along with the electronics and the pump, if present,

C) further material comprising at least one syringe, optionally a portable nitrogen bottle, optionally connection tubes, pipes or lines for connecting the housings to each other, optionally computer adapter cables,

wherein

the two housings are connectable to each other via tubes or lines or pipes to be connected to adapters in the walls of the respective housings or directly via housing-adapters configured to fit directly with each other.

13. Metal organic framework compounds selected from the group consisting of UiO-66-$N_3$ and UiO-66-Cl and derivatives thereof, wherein derivatives means that at least 51% of the, with respect to UiO-66, added functionality is -N3-functionality, -Cl-functionality, respectively.

Fig. 1

Fig. 2a)

Fig 2b)

EP 4 495 593 A1

Fig. 2c)

Fig. 2d)

Fig. 3

EP 4 495 593 A1

Fig. 4

Fig. 5

Fig. 6

Europäisches
Patentamt

European
Patent Office

Office européen
des brevets

# EUROPEAN SEARCH REPORT

**Application Number**

EP 23 18 6904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIN PENG ET AL: "A MOF-based electronic nose for carbon dioxide sensing with enhanced affinity and selectivity by ionic-liquid embedment", JOURNAL OF MATERIALS CHEMISTRY A, vol. 10, no. 47, 6 December 2022 (2022-12-06), pages 25347-25355, XP93094826, GB ISSN: 2050-7488, DOI: 10.1039/D2TA06324G Retrieved from the Internet: URL:https://pubs.rsc.org/en/content/articl epdf/2022/ta/d2ta06324g> | 1-7,11 | INV. G01N29/02 G01N29/22 |
| Y | * page 25348, left-hand column; figure 1 * | 8-10,12 | |
| X | US 2021/404989 A1 (WILMER CHRISTOPHER E [US] ET AL) 30 December 2021 (2021-12-30) | 1-3,6,7 | |
| Y | * paragraphs [0003], [0032], [0048], [0049], [0058], [0070]; claims 1,2 * | 8,9,12 | |
| X | US 2021/293756 A1 (SHINJO YASUSHI [JP] ET AL) 23 September 2021 (2021-09-23) | 1-3,6 | TECHNICAL FIELDS SEARCHED (IPC) |
| Y | * paragraphs [0024], [0027], [0028], [0030], [0033], [0036], [0064], [0065], [0083], [0089], [0056] * | 8,9,12 | G01N |
| X | REZAEE TOOBA ET AL: "Metal-organic frameworks for pharmaceutical and biomedical applications", JOURNAL OF PHARMACEUTICAL AND BIOMEDICAL ANALYSIS, ELSEVIER B.V, AMSTERDAM, NL, vol. 221, 5 September 2022 (2022-09-05), XP087194711, ISSN: 0731-7085, DOI: 10.1016/J.JPBA.2022.115026 [retrieved on 2022-09-05] | 1,3,13 | |
| Y | * paragraph [4.5.Encapsulation]; tables 4,5 * | 8,9,12 | |

-/--

The present search report has been drawn up for all claims

| Place of search | Date of completion of the search | Examiner |
|---|---|---|
| Munich | 27 October 2023 | Filipas, Alin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 18 6904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 329 154 B1 (ALLENDORF MARK D [US] ET AL) 3 May 2016 (2016-05-03) | 1,3 | |
| Y | * paragraph [I:Introduction] * | 8-10,12 | |
| A | * column 3, lines 4-15 * | 11 | |
| X | NAZARI MARZIYEH ET AL: "UiO-66 MOF end-face-coated optical fiber in aqueous contaminant detection", OPTICS LETTERS, vol. 41, no. 8, 5 April 2016 (2016-04-05), pages 1696-1699, XP55869713, US ISSN: 0146-9592, DOI: 10.1364/OL.41.001696 Retrieved from the Internet: URL:https://www.osapublishing.org/DirectPD FAccess/66713AA9-9969-48FB-8D2B4B4FCE740B5 F_338764/ol-41-8-1696.pdf?da=1&id=338764&s eq=0&mobile=no> | 1,3 | |
| Y | * page 1696 * | 8,9,12 | |
| X | HAN SUNGMIN ET AL: "Current Progress and Future Directions in Gas-Phase Metal-Organic Framework Thin-Film Growth", CHEMSUSCHEM, vol. 13, no. 20, 21 October 2020 (2020-10-21), pages 5433-5442, XP55849794, DE ISSN: 1864-5631, DOI: 10.1002/cssc.202001504 | 1,3 | **TECHNICAL FIELDS SEARCHED (IPC)** |
| Y | * paragraph [Introduction]; figure 1 * * page 5434, right-hand column, lines 3-6 * | 8,9,12 | |

-/--

The present search report has been drawn up for all claims

| Place of search | Date of completion of the search | Examiner |
|---|---|---|
| Munich | 27 October 2023 | Filipas, Alin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 18 6904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2022/002507 A1 (KARLSRUHER INST TECHNOLOGIE [DE]) 6 January 2022 (2022-01-06) | 8-10,12 | |
| A | * abstract * * the whole document * | 4,11 | |
| X | KEMPAHANUMAKKAGARI SURESHKUMAR ET AL: "Biomolecule-embedded metal-organic frameworks as an innovative sensing platform", BIOTECHNOLOGY ADVANCES., vol. 36, no. 2, 1 March 2018 (2018-03-01), pages 467-481, XP55793486, GB ISSN: 0734-9750, DOI: 10.1016/j.biotechadv.2018.01.014 * page 471, paragraph 3.3.Nucleic... * | 13 | |
| X | ASSEN AYALEW H ET AL: "The chemistry of metal-organic frameworks with face-centered cubic topology", COORDINATION CHEMISTRY REVIEWS, ELSEVIER SCIENCE, AMSTERDAM, NL, vol. 468, 10 June 2022 (2022-06-10), XP087099149, ISSN: 0010-8545, DOI: 10.1016/J.CCR.2022.214644 [retrieved on 2022-06-10] * table 2 * | 13 | TECHNICAL FIELDS SEARCHED (IPC) |

The present search report has been drawn up for all claims

| Place of search | Date of completion of the search | Examiner |
|---|---|---|
| Munich | 27 October 2023 | Filipas, Alin |

EPO FORM 1503 03.82 (P04C01)

## ANNEX TO THE EUROPEAN SEARCH REPORT
## ON EUROPEAN PATENT APPLICATION NO.

EP 23 18 6904

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2023

| Patent document cited in search report | | Publication date | Patent family member(s) | | Publication date |
|---|---|---|---|---|---|
| US 2021404989 | A1 | 30-12-2021 | US | 2021404989 A1 | 30-12-2021 |
| | | | WO | 2018140696 A1 | 02-08-2018 |
| US 2021293756 | A1 | 23-09-2021 | NONE | | |
| US 9329154 | B1 | 03-05-2016 | NONE | | |
| WO 2022002507 | A1 | 06-01-2022 | EP | 3964830 A1 | 09-03-2022 |
| | | | EP | 4176252 A1 | 10-05-2023 |
| | | | WO | 2022002507 A1 | 06-01-2022 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9940423 A1
- US 20150150778 A1
- WO 2008096239 A1
- WO 2022002507 A1

**Non-patent literature cited in the description**

- **WILSON, A.D. ; M. BAIETTO**. Applications and advances in electronic-nose technologies. *Sensors*, 2009, vol. 9 (7), 5099-5148
- **OKUR, S. et al.** Sniff species: SURMOF-based sensor array discriminates aromatic plants beyond the genus Level. *Chemosensors*, 2021, vol. 9 (7), 171
- **OKUR, S. et al.** An enantioselective e-nose: an array of nanoporous homochiral MOF films for stereospecific sensing of chiral odors. *Angewandte Chemie International Edition*, 2021, vol. 60 (7), 3566-3571